# EUROPÄISCHE PATENTSCHRIFT

(11) **EP 3 624 456 B1**
(45) Veröffentlichungstag und Bekanntmachung des Hinweises auf die Patenterteilung: **13.11.2024**
(21) Anmeldenummer: 19196996.3
(22) Anmeldetag: 12.09.2019
(51) Int. Cl.: H04N 19/593, H04N 19/182

(54) **VERFAHREN ZUR KOMPRESSION VON BILDDATEN**
METHOD FOR COMPRESSION OF IMAGE DATA
PROCÉDÉ DE COMPRESSION DE DONNÉES D'IMAGE

(30) Priorität: 12.09.2018 DE 102018122297
(43) Veröffentlichungstag der Anmeldung: 18.03.2020
(73) Patentinhaber: Arnold & Richter Cine Technik GmbH & Co. Betriebs KG, 80807 München (DE)
(72) Erfinder: ABRAHAM, Kevin, 81245 München (DE); BAUER, Florian, 80939 München (DE); GEISSLER, Peter, 81379 München (DE)
(74) Vertreter: Manitz Finsterwald Patent- und Rechtsanwaltspartnerschaft mbB

(56) Entgegenhaltungen:
- US-A1- 2017 070 750
- US-B1- 6 744 929
- ANONYMOUS: "Universal Coding (part III) | Harder, Better, Faster, Stronger", 18 February 2014 (2014-02-18), XP055661472, Retrieved from the Internet <URL:https://hbfs.wordpress.com/2014/02/18/universal-coding-part-iii/> [retrieved on 20200123]
- ANONYMOUS: "Variable-length quantity - Wikipedia", 8 May 2018 (2018-05-08), XP055661476, Retrieved from the Internet <URL:https://en.wikipedia.org/w/index.php?title=Variable-length_quantity&oldid=840201447> [retrieved on 20200123]

## Beschreibung

Die Erfindung betrifft ein Verfahren zur Kompression von Bilddaten, die eine Vielzahl von Pixelwerten umfassen, die einem jeweiligen Pixel zugeordnet sind.

Derartige Bilddaten werden typischerweise in einer elektronischen Kamera, insbesondere einer digitalen Bewegtbildkamera, mittels eines Bildsensors erzeugt. Der Bildsensor umfasst üblicherweise eine Vielzahl von lichtempfindlichen Sensorelementen, die in Zeilen und Spalten angeordnet sind und einem jeweiligen Pixel (Bildpunkt) entsprechen. Die Sensorelemente erzeugen in Abhängigkeit von dem einfallenden Licht elektrische Signale, die einem jeweiligen Helligkeitswert entsprechen. Die Sensorelemente können mit einem Muster von Farbfiltern versehen sein, so dass jeder Helligkeitswert einem Farbkanal zugeordnet ist, insbesondere Rot, Grün und Blau. Hierfür ist das so genannte Bayer-Muster bekannt, bei dem in einer regelmäßigen Anordnung jeweils ein Rot-Filterelement, zwei Grün-Filterelemente und ein Blau-Filterelement vorgesehen sind. Es kommen grundsätzlich aber auch monochrome Bildsensoren sowie Bildsensoren mit unterschiedlich ausgebildeten Pixeln in Betracht, insbesondere Sensoren mit mehreren Farbkanälen, z.B. RGB-W- oder RGB-IR-Sensoren.

Mit zunehmender Ortsauflösung, d.h. mit zunehmender Anzahl von Pixeln je Bild ist das Volumen der Bilddaten bei modernen Kameras erheblich angestiegen. Es gelangen deshalb Kompressionsverfahren zur Anwendung, um die in der Kamera erzeugten Bilddaten zu komprimieren und in komprimierter Form in einen Speicher der Kamera zu schreiben oder an einen externen Speicher auszugeben. Die komprimierten Bilddaten können später wieder dekomprimiert werden. Hierfür sind verlustfreie und verlustbehaftete Kompressionsverfahren. Eine Bilddatenkompression beruht wie jede Anwendung der Datenkompression darauf, die ursprünglichen Daten, d.h. die Pixelwerte entweder in eine vollständig rekonstruierbare Form zu überführen, die weniger Speicherplatz benötigt (verlustfrei) oder in eine teilweise rekonstruierbare Form zu überführen, die zwar ebenfalls wenig Speicherplatz benötigt, aber nicht alle Daten enthält (verlustbehaftet). Bei der verlustbehafteten Kompression werden also Daten entfernt, deren Verlust allerdings kaum wahrnehmbar sein soll. Eine Bilddatenkompression kann insbesondere ein Prädiktionsverfahren sowie eine Entropiekodierung umfassen. Zusätzlich können Vorverarbeitungsschritte vorgesehen sein, die insbesondere verlustbehaftet sein können und somit insgesamt für eine verlustbehaftete Kompression sorgen (auch wenn die genannte Kombination des Prädiktionsverfahrens und der Entropiekodierung verlustfrei ist). Insbesondere kann ein Requantisierungsverfahren eingesetzt werden. Verfahren zur Kompression von Bilddaten mittels Prädiktion und Entropiekodierung sind beispielsweise aus US 2017/070750 A1 und US 6 744 929 B1 bekannt.

Ferner ist es bekannt, die Bilddaten in den Frequenzraum zu transformieren (z.B. durch Diskrete Cosinus-Transformation gemäß JPEG oder mit Hilfe von Wavelets gemäß JPEG 2000), wobei die Repräsentierung im Frequenzraum durch Koeffizienten erfolgt, die jeweils die Amplitude von bestimmten Frequenzen beschreiben. Um die Daten zu komprimieren, werden diese Koeffizienten frequenzabhängig quantisiert, wobei die den hohen Frequenzen entsprechenden Koeffizienten ungenau übertragen oder verworfen werden. Hierdurch werden feine und hochfrequente Strukturen im Bild entfernt. Derartig komprimierte Bilder haben daher oftmals einen sehr glatten, verwaschenen und leicht unscharfen Bildeindruck. Die bei der Kompression entstehenden Bildfehler sind schlecht vorhersagbar und beschränken sich zudem nicht auf einzelne Pixel, sondern treten als zusätzliche Strukturen (so genannte Artefakte) auf. Außerdem ist die Transformation in den Frequenzraum mit hohem Rechenaufwand verbunden, so dass schnelle Implementierungen, wie sie beispielsweise für Bewegtbildkameras erforderlich sind, mit einem entsprechend hohen technischen Aufwand verbunden sind.

Es sind auch Kompressionsverfahren bekannt, in denen Pixelwerte durch eine variable Anzahl von Bits kodiert werden. Diesem Ansatz liegt die Erkenntnis zugrunde, dass in den Bilddaten manche Werte häufiger auftreten als andere. Die häufigen Werte können vorteilhaft durch wenige Bits kodiert werden. Für die selteneren Werte können mehr Bits vorgesehen werden, die jedoch wegen der geringen Häufigkeit die gesamte Datenmenge nur unwesentlich erhöhen. Dieser Ansatz wird auch als Entropiekodierung bezeichnet. Ein Problem bei dieser Art der Kodierung besteht darin, dass sie vergleichsweise schlecht parallelisierbar ist. Das bedeutet, dass die Pixelwerte wegen der variablen Anzahl von Bits nur nacheinander und somit mit einer vergleichsweise geringen Geschwindigkeit kodiert (und dekodiert) werden können.

Aus den Internetveröffentlichungen Anonymous: "Universal Coding (part III) | Harder, Better, Faster, Stronger", (20140218), URL: https://hbfs.wordpress.com/ 2014/02/18/universal-coding-part-iii/, (20200123) und Anonymous: "Variablelength quantity - Wikipedia", (20180508), URL: https://en.wikipedia.org/w/index.php?title=Variable-length_quantity&oldid=840201447, (20200123) ist eine Kodierung mit variabler Codewortlänge bekannt.

Es ist eine Aufgabe der Erfindung, ein schnelleres Kompressionsverfahren zu schaffen, das bei hohem Kompressionsfaktor eine gute Qualität der dekomprimierten Bilder erreicht und die Ausbildung von Artefakten vermeidet. Vorzugsweise soll das Kompressionsverfahren auch verlustfrei sein.

Diese Aufgabe wird durch ein Verfahren mit den Merkmalen des Anspruchs 1 gelöst.

Bei dem Verfahren nach Anspruch 1 werden die Pixelwerte für zumindest einige Pixel gemäß den folgenden Schritten komprimiert:
- Ermitteln eines geschätzten Pixelwerts des betreffenden Pixels in Abhängigkeit von dem Pixelwert zumindest eines vorbestimmten anderen Pixels unter Verwendung wenigstens einer Schätzregel;
- Bilden eines Differenzwerts des betreffenden Pixels, der einer vorbestimmten Relation zwischen dem Pixelwert und dem geschätzten Pixelwert des betreffenden Pixels entspricht, wobei der Differenzwert durch ein erstes Binärwort repräsentiert wird, das eine erste Länge aufweist, wobei die erste Länge eine effektive Länge des ersten Binärworts ist;
- Kodieren des ersten Binärworts durch wenigstens ein zweites Binärwort, wobei das wenigstens eine zweite Binärwort eine zweite Länge aufweist, die eine vorbestimmte Länge des jeweiligen zweiten Binärworts ist,

wobei die erste Länge mit der zweiten Länge verglichen wird, um festzustellen, ob die erste Länge kleiner als die zweite Länge ist,
wobei das erste Binärwort durch ein einzelnes zweites Binärwort vollständig kodiert wird, wenn die erste Länge kleiner als die zweite Länge ist, und wobei andernfalls das erste Binärwort durch mehrere zweite Binärwörter vollständig kodiert wird.

Zusammengefasst werden die Pixelwerte zunächst in Differenzwerte überführt, die sodann jeweils durch wenigstens ein Binärwort kodiert werden, das eine vorbestimmte Länge aufweist. Ein jeweiliger Differenzwert wird hierbei entweder durch ein einzelnes Binärwort oder durch mehrere Binärwörter kodiert, wobei die Binärwörter jeweils eine vorbestimmte Länge aufweisen, die insbesondere eine feste Länge sein kann. Durch die vorbestimmte Länge kann der Kodierungsvorgang für mehrere Differenzwerte parallel ausgeführt werden, um den Kodierungsvorgang insgesamt wesentlich zu beschleunigen, insbesondere bei Verwendung von Grafikprozessoren, die für die schnelle parallele Verarbeitung von Daten besonders geeignet sind.

Das Ermitteln der geschätzten Pixelwerte erfolgt vorzugsweise durch ein sogenanntes Prädiktionsverfahren, bei dem ein jeweiliger Pixelwert z.B. durch eine gewichtete Linearkombination vorbestimmter anderer Pixelwerte geschätzt bzw. vorhergesagt wird (Schätzregel). Die Differenzwerte entsprechen somit einem Schätz- bzw. Vorhersagefehler, der in der Regel deutlich kleiner als der zugrundeliegende Pixelwert ist. Die Differenzwerte decken hierdurch einen geringeren Wertebereich ab als die Pixelwerte selbst bzw. liegen in einer engeren Verteilung näher an dem Wert Null. Hierdurch können die Differenzwerte vorteilhaft binär durch eine geringere Anzahl von Bits kodiert werden, sodass die Bilddaten insgesamt durch eine geringere Anzahl von Bits kodiert und hierdurch komprimiert werden können.

Der Differenzwert des betreffenden Pixels liegt allgemein in Binärform vor, d.h. der Differenzwert wird durch eine Anzahl von Bits eines ersten Binärworts repräsentiert, die entweder den Wert Null oder den Wert Eins annehmen können. Der Differenzwert entspricht vorzugsweise einer Dezimalzahl, die durch das erste Binärwort im sogenannten binären Zahlenbereich repräsentiert wird. Im Rahmen des Verfahrens kann der Differenzwert zunächst als ein Dezimalwert vorliegen und sodann in eine Binärzahl transformiert werden, um das erste Binärwort zu erhalten. Hierbei kann der Differenzwert auch quantisiert und weiterverarbeitet werden. Es ist jedoch auch möglich, dass der Differenzwert unmittelbar als das erste Binärwort ermittelt wird, beispielsweise wenn der betreffende Pixelwert und der geschätzte Pixelwert jeweils durch Binärwörter repräsentiert und verarbeitet werden. Unabhängig von der konkreten Ermittlung des ersten Binärworts kann das erste Binärwort als eine Zwischenkodierung des zugrundeliegenden Pixelwerts angesehen werden. Das erste Binärwort wird dann durch wenigstens ein zweites Binärwort weiterkodiert, wie nachfolgend noch genauer beschrieben wird.

Das erste Binärwort weist eine effektive erste Länge auf, die vorzugsweise von der Höhe des Differenzwerts abhängt. Allgemein kann die effektive Länge der Anzahl von Bits entsprechen, die im binären Zahlensystem für die Darstellung einer Dezimalzahl vorgesehen sind. Sofern mehr Bits vorgesehen werden, sind diese vorzugsweise auf den Wert Null gesetzt (etwa bei Ausführung des Verfahrens auf einem Computer, der nur Binärwörter mit einer festen Länge verarbeitet). Beispielsweise kann das erste Binärwort in einer aufsteigenden Reihenfolge der Bits nach dem letzten Bit, welches auf den Wert Eins gesetzt ist ("most significant bit"), mehrere Bits aufweisen, die jeweils auf Null gesetzt sind. Die effektive Länge entspricht somit der Anzahl von Bits zwischen und einschließlich dem niederwertigsten Bit ("least significant bit") und dem höchstwertigsten Bit ("most significant bit"), d.h. das niederwertigste Bit und das höchstwertigste Bit werden mitgezählt.

Die erste Länge des ersten Binärworts wächst vorzugsweise mit der Größe des Differenzwerts, der durch das erste Binärwort repräsentiert wird. Die erste Länge hängt also von dem Differenzwert ab, sodass hohe und damit seltene Differenzwerte durch mehr Bits repräsentiert werden als niedrige bzw. häufige Differenzwerte. Das erste Binärwort wird nun durch ein oder mehrere zweite Binärwörter kodiert, die jeweils eine vorbestimmte zweite Länge haben und hierdurch eine vorteilhafte parallele Kodierung mehrerer erste Binärwörter ermöglichen. Vorzugsweise weist jedes der mehreren zweiten Binärwörter die zweite Länge auf, d.h. die zweite Länge ist für alle zweiten Binärwörter identisch. Der Vorteil der parallelen Kodierung kann hierdurch maximiert werden. Wie noch erläutert wird, können die mehreren zweiten Binärwörter jedoch auch unterschiedliche vorbestimmte zweite Längen aufweisen.

In Abhängigkeit von der ersten Länge wird ein jeweiliges erstes Binärwort entweder durch ein einzelnes zweites Binärwort oder durch mehrere zweite Binärwörter kodiert. Wenn die erste Länge kleiner als die jeweilige vorbestimmte zweite Länge ist, stehen im zweiten Binärwort genügend Bits zur Verfügung, um das erste Binärwort vollständig und somit verlustfrei zu kodieren. Wenn die erste Länge größer oder gleich der zweiten Länge ist, wird das erste Binärwort durch mehrere zweite Binärwörter kodiert, d.h. die Information des ersten Binärworts wird auf mehrere zweite Binärwörter verteilt, um das erste Binärwort vollständig und somit verlustfrei zu kodieren. Das erste Binärwort wird auf diese Weise also in Abhängigkeit von der ersten Länge adaptiv kodiert. Der Vorteil der variablen ersten Länge, durch die die Bilddaten erheblich komprimiert werden, wird mit dem Vorteil einer vorbestimmten und insbesondere festen Wortlänge für die zweiten Binärwörter vereint. Auf diese Weise wird ein Kompressionsverfahren geschaffen, das bei hohem Kompressionsgrad auch besonders schnell durchgeführt werden kann. Ferner müssen bei der Kodierung keine Bits verworfen werden, sodass eine gute Qualität der dekomprimierten Bilddaten gewährleistet ist, d.h. die Ausbildung von Artefakten wird vermieden. Der hohe Kompressionsgrad ermöglicht eine reduzierte Nutzung von Speicherplatz sowie eine besonders schnelle Übertragung der komprimierten Daten an einen entfernten Server, der z.B. eine virtuelle Cloud implementiert. Ferner können die Daten nach einer Aufzeichnung der Pixelwerte auch schnell kodiert werden, sodass diese sogar in Echtzeit an einen Server gesandt werden können. Hierdurch wird es auch ermöglicht, die beispielsweise an einer Bewegtbildkamera bereitgestellten Speicherressourcen zu reduzieren. Insgesamt leistet die Erfindung somit einen wesentlichen Beitrag zur global vernetzten Gesellschaft, in der aktuelle Bilddaten sofort und überall zur Verfügung stehen sollen.

Die zweite Länge ist für eine jeweilige Pixelgruppe gleich, wobei eine jeweilige Pixelgruppe einen lokalen Bildbereich in den Bilddaten repräsentiert. Eine lediglich für eine jeweilige Pixelgruppe gleiche zweite Länge besitzt den Vorteil, dass die zweite Länge in Abhängigkeit von dem Bildinhalt variiert werden kann, um einen verbesserten Kompressionsfaktor zu erreichen. Der verbesserte Kompressionsfaktor kann beispielsweise bei relativ vielen großen ersten Längen durch eine vergrößerte zweite Länge erzielt werden, sodass insgesamt weniger Kodierinformationsbits verwendet werden müssen. Die Information über die zweite Länge kann für ein Dekomprimieren der Bilddaten in die komprimierten Bilddaten integriert werden und beispielsweise in einem Bitstrom, der die komprimierten Bilddaten repräsentiert, an einen Dekodierer übertragen werden. Entsprechendes kann vorgesehen sein, wenn das erste Binärwort durch mehrere zweite Binärwörter vollständig kodiert wird und die zweiten Längen für die mehreren zweiten Binärwörter unterschiedlich sind, wobei dann die unterschiedlichen zweiten Längen für eine jeweilige Pixelgruppe einheitlich vorbestimmt sein können.

Die zweite Länge wird proportional zu der durchschnittlichen ersten Länge der ersten Binärwörter der betreffenden Pixelgruppe gewählt.

Die zweiten Binärwörter, durch die ein jeweiliges erstes Binärwort kodiert wird, können in einem Bitstrom verkettet bzw. aneinandergereiht werden. Die Reihenfolge der Verkettung kann der Reihenfolge der ersten Binärwörter entsprechen, die für eine jeweilige Kodierung betrachtet werden. Es ist jedoch möglich, für sämtliche zweite Binärwörter oder auch nur einen Teil der zweiten Binärwörter eine umgekehrte Reihenfolge vorzusehen. Insbesondere ist es möglich, im Falle einer Kodierung durch die mehreren zweiten Binärwörter, diese mehreren zweiten Binärwörter in einer umgekehrten Reihenfolge in einen Bitstrom zu schreiben. Dies besitzt den Vorteil, dass im Zuge der Dekodierung nicht erst alle mehreren zweiten Binärwörter eingelesen werden müssen, um mit der Bildung des ersten Binärworts zu beginnen. Beispielsweise kann die Reihenfolge der zweiten Binärwörter im Zuge des Kodierens einer Reihenfolge der Wertigkeit der Bits des ersten Binärworts entsprechen (d.h. beginnend mit dem "least significant bit" und endend mit dem "most significant bit" des ersten Binärworts). Die zweiten Binärwörter können dann in der umgekehrten Reihenfolge in den Bitstrom geschrieben werden. Einzelne zweite Binärwörter können hingegen in der regulären Reihenfolge geschrieben werden.

Im Rahmen der Offenbarung ist der Begriff "aufsteigende Reihenfolge" allgemein als eine vorbestimmte bzw. definierte Reihenfolge zu verstehen. Diese Reihenfolge kann durch eine "Einleserichtung" von Bits, z.B. von links nach rechts, oder durch eine Reihenfolge der Wertigkeit von Bits in einem jeweiligen Binärwort (z.B. von rechts nach links) definiert sein.

Generell müssen nicht sämtliche Pixelwerte eines jeweiligen Bilddatensatzes, der beispielsweise einem einzelnen Bild einer Bildersequenz entsprechen kann, gemäß dem erfindungsgemäßen Verfahren komprimiert werden, sondern das erfindungsgemäße Verfahren kann auch lediglich für einige der Pixelwerte durchgeführt werden. Beispielsweise kann der Kompression eine Analyse der Bilddaten vorausgehen, wobei als Ergebnis der Analyse für manche (variable oder vorbestimmte) Bildbereiche ein erstes Kompressionsverfahren (insbesondere das erfindungsgemäße Verfahren) und für andere Bildbereiche ein hiervon verschiedenes zweites Kompressionsverfahren verwendet wird, insbesondere um zulasten eines höheren Rechenaufwands und/oder einer schlechteren Parallelisierbarkeit eine stärkere Kompressionsrate und/oder einen geringeren Speicherbedarf zu erzielen.

Die Erfindung ist generell auch nicht auf eine bestimmte Reihenfolge der Kompression der Pixelwerte bzw. der Anordnung der zugeordneten Pixel eingeschränkt.

Im Rahmen der Erfindung ist es auch nicht ausgeschlossen, dass nach dem Erzeugen der originären Bilddaten (beispielsweise mittels eines Bildsensors) und vor dem Komprimieren der Pixelwerte noch Vorverarbeitungsschritte durchgeführt werden (z.B. Quantisierung, Linearisierung, Gamma-Kurve).

Vorteilhafte Ausführungsformen sind in den abhängigen Ansprüchen, der Beschreibung und den Figuren offenbart.

Gemäß einer bevorzugten Ausführungsform umfasst das wenigstens eine zweite Binärwort wenigstens ein Kodierinformationsbit, wobei das Kodierinformationsbit auf einen ersten Wert gesetzt wird, wenn das erste Binärwort durch ein einzelnes zweites Binärwort kodiert wird, und wobei andernfalls das Kodierinformationsbit von wenigstens einem der mehreren zweiten Binärwörter auf einen zweiten Wert gesetzt wird. Das Kodierinformationsbit gibt somit an, auf welche Weise das erste Binärwort kodiert worden ist. Diese Information kann insbesondere bei einem nachfolgenden Dekodieren verwendet werden, um die ersten Binärwörter vollständig zu rekonstruieren. Vorzugsweise ist in jedem zweiten Binärwort lediglich ein Kodierinformationsbit vorgesehen, wodurch der Kodiervorgang (und auch der Dekodiervorgang) besonders einfach und somit zuverlässig ist. Es sind aber auch andere Verfahrensweisen möglich. Insbesondere können mehrere Kodierinformationsbits verwendet werden, um komplexere Informationen über den Kodiervorgang für die Dekodierung zur Verfügung zu stellen. Ferner ist es denkbar, dass insbesondere bei einer Kodierung des ersten Binärworts durch mehrere zweite Binärwörter nicht alle zweiten Binärwörter ein Kodierinformationsbit umfassen. So kann eine Kodierinformation beispielsweise auf ein bestimmtes oder mehrere bestimmte zweite Binärwörter beschränkt werden.

Indem die zweite Länge des oder der jeweiligen zweiten Binärworts/Binärwörter bekannt ist, kann bei einer späteren Dekodierung unmittelbar ein jeweiliger Startpunkt bestimmt werden. Allerdings ist auch möglich, dass durch eine Auswertung der Kodierinformationsbits der Anfang eines jeweiligen Pixels bzw. des oder der zugehörigen zweiten Binärworts/Binärwörter bestimmt wird. Darüber hinaus ist es auch möglich, dass jeweilige Kodierinformationsbits nicht Bestandteil von jeweiligen zweiten Binärwörtern sind. So können Kodierinformationsbits auch separat von den zweiten Binärwörtern, z.B. in einer Headerdatei abgelegt sein und unter Verwendung einer Zuordnungstabelle bei einer späteren Dekodierung berücksichtigt werden.

Im Rahmen der Offenbarung dieser Anmeldung ist der oben genannte erste Wert des Kodierinformationsbit vorzugsweise stets Null und der oben genannte zweite Wert des Kodierinformationsbits vorzugsweise stets Eins. Eine Umkehrung dieser Zuordnung ist jedoch auch möglich. Ferner versteht es sich, dass das Setzten eines Bits indem Sinne zu verstehen ist, dass sichergestellt wird, dass das betreffende Bit den gewünschten Wert aufweist. Hierzu kann beispielsweise vor einem etwaigen Setzen des Bits explizit oder implizit überprüft werden, ob das Bit den gewünschten Wert schon aufweist. Zutreffendenfalls braucht das Bit nicht nochmals gesetzt zu werden, wobei dies aus Zuverlässigkeitsgründen jedoch möglich ist. Darüber hinaus versteht es sich, dass im binären System ein Bit nur einen von zwei Werten annehmen kann. Somit kann die Überprüfung, ob das Bit z.B. auf den ersten Bit gesetzt ist, auch erfolgen, indem überprüft wird, ob das Bit auf den zweiten Wert gesetzt ist.

Vorzugsweise wird das erste Binärwort durch das wenigstens eine zweite Binärwort kodiert, indem das Kodierinformationsbit dem ersten Binärwort oder einem Teilwort des ersten Binärworts hinzugefügt wird, um das wenigstens eine zweite Binärwort zu bilden, wobei das Kodierinformationsbit in dem zweiten Binärwort eine vorbestimmte Position aufweist. Die vorbestimmte Position kann insbesondere eine äußere bzw. randseitige Position in dem zweiten Binärwort sein. Vorzugsweise entspricht die Position des Kodierinformationsbits der Position des niederwertigsten Bits in dem zweiten Binärwort. Hierzu kann das Kodierinformationsbit dem ersten Binärwort oder dem Teilwort z.B. an der Seite des niederwertigsten Bits des betreffenden Worts angehängt werden. Hierdurch kann insbesondere der Dekodiervorgang beschleunigt werden.

Wenn die Summe der ersten Länge und der Anzahl des wenigstens einen Kodierinformationsbits kleiner als die zweite Länge ist, kann das zweite Binärwort gebildet werden, indem das erste Binärwort mit einer Anzahl von nullwertigen Bits verkettet wird, sodass das wenigstens eine zweite Binärwort die zweite Länge aufweist. Vorzugsweise werden die nullwertigen Bits dem ersten Binärwort an der Seite des höchstwertigsten Bits des ersten Binärworts (gleich Eins) angehängt, sodass das Bitmuster des ersten Binärworts nicht verändert wird. Das erste Binärwort kann hierdurch später besonders einfach dekodiert werden.

Die Anzahl der nullwertigen Bits hängt von der Anzahl der Kodierinformationsbits (vorzugsweise ein Kodierinformationsbit) und der ersten Länge ab. Die Anzahl der nullwertigen Bits kann bestimmt werden, indem die Anzahl der Kodierinformationsbits und die erste Länge von der zweiten Länge subtrahiert werden.

Es versteht sich, dass die hier beschriebenen Verfahrensschritte allgemein auf unterschiedliche Weisen durchgeführt werden können. So kann beispielsweise das genannte oder auch ein anderes Anhängen von nullwertigen Bits dadurch geschehen, dass ausgehend von einem zweiten Binärwort, in dem sämtliche Bits auf Null gesetzt sind, ein Teil der Bits gemäß den Bits des ersten Binärworts bzw. Teilworts überschrieben werden. Ebenso kann das Kodierinformationsbit hinzugefügt werden, indem ein hierfür vorgesehenes Bit in dem zweiten Binärwort auf den Wert des Kodierinformationsbits gesetzt und hierdurch zum Kodierinformationsbit wird. Mit anderen Worten ist zumindest ein Teil der hier beschriebenen Verfahrensschritte auch im Sinne des durch einen jeweiligen Verfahrensschritt umgesetzten Konzepts oder Resultats zu verstehen.

Nach einer Ausführungsform wird das erste Binärwort durch das einzelne zweite Binärwort kodiert, indem das erste Binärwort und das Kodierinformationsbit miteinander verkettet werden, um das einzelne zweite Binärwort zu bilden. Die Kodierung ist somit besonders einfach, wobei das Bitmuster bzw. die Bitfolge des ersten Binärworts nicht verändert wird. Vorzugsweise wird ein Kodierinformationsbit dem ersten Binärwort an der Seite des niederwertigsten Bits angehängt.

Nach einer weiteren Ausführungsform wird das erste Binärwort durch die mehreren zweiten Binärwörter kodiert, indem das erste Binärwort in mehrere Teilworte zerlegt bzw. aufgespalten wird. Hierbei weist jedes der mehreren Teilworte eine dritte Länge auf, die eine vorbestimmte, insbesondere feste Länge eines jeweiligen Teilworts und kleiner als die zweite Länge ist. Ferner wird jedem der mehreren Teilwörter eines der mehreren zweiten Binärwörter zugeordnet, wobei jedes der mehreren Teilworte mit dem Kodierinformationsbit des zugeordneten zweiten Binärworts verkettet wird, um das zugeordnete zweite Binärwort zu bilden. Vorzugsweise ist für jedes Teilwort genau ein zweites Binärwort vorgesehen, um die Kodierung bzw. eine nachfolgende Dekodierung effizient und besonders robust zu gestalten.

Das Zerlegen des ersten Binärworts in die mehreren Teilworte erfolgt vorzugsweise in aufsteigender Reihenfolge der Bits des ersten Binärwortes, wobei ein jeweiliges Teilwort durch eine Anzahl von Bits des ersten Binärworts gebildet wird, die gleich der dritten Länge ist. Wenn die dritte Länge kein ganzzahliges Vielfaches der ersten Länge ist, kann das gemäß der aufsteigenden Reihenfolge letzte der mehreren Teilwörter durch eine Verkettung einer Anzahl von nullwertigen Bits mit einer Restanzahl von Bits des ersten Binärworts gebildet wird, sodass die Summe der Anzahl von nullwertigen Bits und der Restanzahl von Bits des ersten Binärworts gleich der dritten Länge ist. Die Teilworte entsprechen also zusammenhängenden Bitfolgen oder Blöcken aus dem ersten Binärwort, die die dritte Länge aufweisen sollen. Sofern die erste Länge durch die dritte Länge ohne Rest teilbar ist können die Teilwörter unmittelbar und vollständig durch Blöcke des ersten Binärworts gebildet werden. Im Falle eines Rests werden die verbleibenden Bits des ersten Binärworts um nullwertige Bits ergänzt, um das letzte Teilwort zu bilden. Die Kodierung kann auf diese Weise auch dann vollständig und verlustfrei durchgeführt werden, wenn sich das erste Binärwort nicht exakt in Blöcke der dritten Länge aufspalten lässt.

Im Allgemeinen ist die aufsteigende Reihenfolge von Bits in einem Binärwort, insbesondere in dem ersten Binärwort, die Reihenfolge von Bits beginnend mit dem niederwertigsten Bit hin zum höchstwertigsten Bit. Andere Definitionen sind jedoch prinzipiell denkbar.

Gemäß einer Ausführungsform wird das Kodierinformationsbit, welches gemäß der aufsteigenden Reihenfolge mit dem letzten der mehreren Teilwörter verkettet wird, auf den ersten Wert (insbesondere Eins) gesetzt, wobei das jeweilige Informationsbit der übrigen Teilwörter bzw. des übrigen Teilworts auf den zweiten Wert (insbesondere Null) gesetzt wird. Das Kodierinformationsbit zeigt in diesem Fall in jedem zweiten Binärwort unmittelbar an, ob das erste Binärwort durch die vorangegangenen zweiten Binärwörter bereits vollständig kodiert worden ist oder nicht. Durch Auswerten aufeinanderfolgender Kodierinformationsbits (von unmittelbar aufeinanderfolgenden zweiten Binärwörtern) kann also sofort festgestellt werden, welche zweiten Binärwörter einem gemeinsamen ersten Binärwort zugrunde liegen und dementsprechend zur Dekodierung dieses ersten Binärworts heranzuziehen sind. Die Bilddaten können somit besonders effizient und zuverlässig komprimiert und wieder dekomprimiert werden.

Vorzugsweise unterschieden sich die zweite Länge und die dritte Länge genau um die Anzahl des wenigstens einen Kodierinformationsbits, um den Kompressionsfaktor zu maximieren. Es ist aber auch möglich, in dem zweiten Binärwort zusätzliche Bits, etwa für eine Fehlerkorrektur vorzusehen, wodurch sich die zur Verfügung stehende dritte Länge entsprechend verkleinert.

Nach einer Ausführungsform können mehrere Pixelgruppen in Abhängigkeit von der Ähnlichkeit der Differenzwerte der Pixel gebildet werden, sodass die Differenzwerte der Pixel einer betreffenden Pixelgruppe zueinander ähnlicher sind als zu den Differenzwerten der Pixel einer anderen Pixelgruppe. Für jede Pixelgruppe kann dann eine zweite Länge gewählt werden, die für die Kodierung der Differenzwerte bzw. ersten Binärwörter optimal im Sinne eines hohen Kompressionsgrads ist.

Die zweite Länge ist, wie bereits ausgeführt, proportional zu der Größe der Differenzwerte einer betreffenden Pixelgruppe. Hierzu kann vereinfachend die zweite Länge proportional zu der ersten Länge derjenigen ersten Binärwörter gewählt werden, die die Differenzwerte einer betreffenden Pixelgruppe repräsentieren. Beispielsweise kann die zweite Länge in Abhängigkeit von der durchschnittlichen ersten Länge der ersten Binärwörter gewählt werden, die der betreffenden Pixelgruppe angehören. So ist es denkbar, dass für eine betreffende Pixelgruppe die zweite Länge z.B. gleich der durchschnittlichen ersten Länge minus der Anzahl an Kodierinformationsbits ist.

Die vorbestimmte Länge des jeweiligen zweiten Binärworts kann für die mehreren zweiten Binärwörter konstant sein, wenn das jeweilige erste Binärwort durch mehrere zweite Binärwörter vollständig kodiert wird. Hierdurch kann der Vorteil einer parallelen Verarbeitung erhöht werden.

Es ist allerdings auch möglich, dass - wenn das jeweilige erste Binärwort durch mehrere zweite Binärwörter vollständig kodiert wird - die zweiten Längen der mehreren zweiten Binärwörter unterschiedlich sind. Beispielsweise kann die zweite Länge mit zunehmender Anzahl von zweiten Binärwörtern, die zur Kodierung des ersten Binärworts herangezogen werden, abnehmen. Zur Festlegung der jeweiligen zweiten Länge kann beispielsweise eine indirekte lokale Auswertung des Bildinhalts dadurch vorgenommen werden, dass die ersten Binärwörter eines Bildbereichs mit unterschiedlichen Werten der zweiten Länge der zweiten Binärwörter kodiert werden und hierbei die jeweils erzielte Kodiereffizienz bewertet wird, wobei diejenige zweite Länge oder diejenigen zweiten Längen mit der höchsten Kodiereffizienz ausgewählt wird/werden und dieses Auswerteergebnis in einer Steuertabelle (für die spätere Dekompression) hinterlegt wird. Es ist auch denkbar, dass eine Statistik der Pixel- und/oder Differenzwerte in der Weise berücksichtigt wird, dass in den meisten Fällen eine feste Länge und nur in den seltenen Fällen eine abweichende Länge verwendet wird.

Nach einer weiteren Ausführungsform entspricht der Schritt des Kodierens des ersten Binärworts durch wenigstens ein zweites Binärwort einem ersten Kodierverfahren, wobei für zumindest einige weitere Pixel, die nicht gemäß dem ersten Kodierverfahren kodiert werden, das erste Binärwort gemäß einem zweiten Kodierverfahren kodiert wird. Mit anderen Worten kann alternativ zu dem ersten Kodierverfahren für bestimmte Bildbereiche bzw. Pixelgruppen ein abweichendes Kodierverfahren vorgesehen werden, d.h. es wird zumindest zwischen zwei unterschiedlichen Kodierverfahren ausgewählt. Das zweite Kodierverfahren kann allgemein beliebig ausgestaltet sein, wobei insbesondere ein Kodierverfahren nach Golomb-Rice möglich ist. Eine Selektion eines jeweiligen Kodierverfahrens kann z.B. jeweils in Abhängigkeit einer lokalen Auswertung des Bildinhalts erfolgen.

Im Hinblick auf das zumindest eine vorbestimmte andere Pixel, dessen Pixelwert für die Ermittlung des geschätzten Pixelwerts herangezogen wird, ist es möglich, eine oder mehrere vorteilhafte Vorgehensweisen zu verfolgen, die im Folgenden beschrieben sind.

Nach einer Ausführungsform umfassen die Bilddaten Pixelwerte mehrerer voneinander verschiedener Farben, wobei das zumindest eine vorbestimmte andere Pixel nicht unmittelbar benachbart zu dem betreffenden Pixel angeordnet ist, und wobei die Pixelwerte des betreffenden Pixels und des zumindest einen vorbestimmten anderen Pixels dieselbe Farbe aufweisen. Mit anderen Worten werden zur Schätzung eines Pixelwerts nur Pixelwerte derselben Farbe herangezogen. Die Genauigkeit der Schätzung kann hierdurch verbessert werden. Oftmals liegen die Farbfilter derselben Farbe bei einem Bildsensor nicht unmittelbar benachbart zueinander. Dies trifft insbesondere auf das bereits erwähnte Bayer-Muster zu. Es versteht sich, dass mehrere Pixel zur Ermittlung des geschätzten Pixelwerts verwendet werden können, um die Genauigkeit des geschätzten Pixelwerts zu erhöhen.

Nach einer weiteren Ausführungsform mit Pixelwerten mehrerer voneinander verschiedener Farben kann das Ermitteln des geschätzten Pixelwerts des betreffenden Pixels in Abhängigkeit von dem jeweiligen Pixelwert mehrerer vorbestimmter anderer Pixel erfolgen. Ein Teil dieser Pixel ist hierbei unmittelbar benachbart zu dem betreffenden Pixel angeordnet, wobei die Pixelwerte dieses Teils von Pixeln eine andere Farbe aufweisen als der Pixelwert des betreffenden Pixels. Ein anderer Teil der vorbestimmten anderen Pixel ist jedoch nicht unmittelbar benachbart zu dem betreffenden Pixel angeordnet, wobei die Pixelwerte dieses anderen Teils von Pixeln dieselbe Farbe aufweisen, wie der Pixelwert des betreffenden Pixels. Mit anderen Worten werden zur Ermittlung des geschätzten Pixelwerts auch Pixelwerte lediglich einer oder mehrerer anderer Farben verwendet. Hierdurch können Korrelationen zwischen den Pixelwerten derselben als auch verschiedener Farben ausgenutzt werden, um die Schätzgenauigkeit noch weiter zu erhöhen.

Im Allgemeinen können die Pixel in einer Anordnung von mehreren Zeilen vorgesehen sein, wobei die Pixelwerte zeilenweise komprimiert werden, und wobei das Ermitteln des geschätzten Pixelwerts des betreffenden Pixels in Abhängigkeit von dem jeweiligen Pixelwert mehrerer vorbestimmter anderer Pixel erfolgt. Die anderen Pixel können hierbei in der Zeile des betreffenden Pixels und/oder in einer bereits komprimierten Zeile angeordnet sein. Alternativ können die anderen Pixel ausschließlich in der Zeile des betreffenden Pixels angeordnet sein, wodurch das Verfahren noch weiter beschleunigt werden kann.

Die Bilddaten können insbesondere ein Einzelbild aus einer zeitlichen Abfolge von mehreren Einzelbildern repräsentieren, d.h. das Einzelbild kann z.B. aus einer Video- bzw. Bewegtbildsequenz entnommen sein. Die dem Einzelbild zugehörigen Pixelwerte müssen hierbei nicht zwingend zu einem gemeinsamen Zeitpunkt aufgenommen worden sein. Die Pixelwerte können auch nacheinander aufgenommen und zu einem Einzelbild zusammengesetzt sein.

Das Verfahren kann generell dazu ausgebildet sein, die Bilddaten verlustfrei zu komprimieren. "Verlustfrei" bedeutet hierbei, dass die ersten Binärwörter vollständig und ohne Informationsverlust durch die zweiten Binärwörter abgebildet werden und verlustfrei dekodiert werden können. Somit können die ersten Binärwörter auch quantisierte Differenzwerte repräsentieren, wobei der Informationsverlust durch die Quantisierung nicht als relevanter Verlust angesehen wird. Ein jeweiliger Differenzwert kann also gemäß einer Differenzwert-Quantisierungsregel quantisiert werden, wobei das erste Binärwort den quantisierten Differenzwert repräsentiert. Abgesehen von Rundungseffekten ist jedoch auch eine völlig verlustfreie Komprimierung möglich.

Wie bereits oben angedeutet kann das Verfahren besonders schnell durchgeführt werden, indem die Differenzwerte mehrerer betreffender Pixel, die jeweils durch ein erstes Binärwort repräsentiert werden, parallel kodiert werden. Dies kann beispielsweise durch Grafikprozessoren erfolgen, die für die parallele und blockweise Verarbeitung von Bilddaten besonders geeignet sind (parallele "threads"). Solche Grafikprozessoren sind auf modernen Grafikkarten vielfach vorhanden und zunehmend weit verbreitet.

Die Erfindung bezieht sich auch auf ein Verfahren zur Kompression von Bilddaten und Dekompression von Bilddaten (Dekompressionsverfahren), die nach einer der vorstehend beschriebenen Ausführungsformen des Kompressionsverfahrens komprimiert werden und die einen Bitstrom mit einer Vielzahl von Bits umfassen, wobei der Bitstrom eine Vielzahl von Pixelwerten repräsentiert, die einem jeweiligen Pixel zugeordnet sind, wobei das Verfahren zur Dekompression folgende Schritte umfasst:
- Zerlegen des Bitstroms in eine Vielzahl zweiter Binärwörter, wobei jedes der zweiten Binärwörter eine zweite Länge aufweist, die eine vorbestimmte, insbesondere feste Länge des jeweiligen zweiten Binärwörts ist, wobei jedes der zweiten Binärwörter an einer vorbestimmten Position in dem zweiten Binärwort wenigstens ein Kodierinformationsbit aufweist;
- Dekodieren wenigstens eines ersten Binärworts durch wenigstens eines der zweiten Binärwörter, wobei das erste Binärwort einen Differenzwert repräsentiert, der einer vorbestimmten Relation zwischen einem Pixelwert eines betreffenden Pixels und einem geschätzten Pixelwert des betreffenden Pixels entspricht, wobei festgestellt wird, ob das Kodierinformationsbit des wenigstens einen der zweiten Binärwörter auf einen ersten Wert gesetzt ist,
   wobei das erste Binärwort durch ein einzelnes der zweiten Binärwörter vollständig dekodiert wird, wenn das Kodierinformationsbit des einzelnen der zweiten Binärwörter auf den ersten Wert gesetzt ist, und wobei andernfalls das erste Binärwort durch mehrere der zweiten Binärwörter vollständig dekodiert wird;
- Ermitteln eines nachgebildeten geschätzten Pixelwerts des betreffenden Pixels in Abhängigkeit von zumindest einem zuvor dekomprimierten Pixelwert, der dem zumindest einen vorbestimmten anderen Pixel entspricht, unter Verwendung einer Schätzregel; und
- Ermitteln eines dekomprimierten Pixelwerts des betreffenden Pixels in Abhängigkeit von dem ersten dekodierten Binärwort und dem nachgebildeten geschätzten Pixelwert des betreffenden Pixels.

Zusammengefasst entspricht das Dekompressionsverfahren einer Umkehrung des zuvor geschilderten Kompressionsverfahrens. Somit werden die Differenzwerte in Form von ersten Binärwörtern entweder durch einzelne oder durch mehrere zweite Binärwörter des Bitstroms dekodiert. Hierzu wird das in einem jeweiligen zweiten Binärwort enthalten Kodierinformationsbit ausgewertet, welches anzeigt, ob für die Dekodierung ein einzelnes oder mehrere zweite Binärwörter zu berücksichtigen sind, um eine vollständige bzw. verlustfreie Dekodierung zu erzielen.

Vorzugsweise ist in jedem der zweiten Binärwörter ein Kodierinformationsbit vorgesehen, sodass ein betreffendes zweites Binärwort stets eindeutig für eine korrekte Dekodierung eines ersten Binärworts verwendet werden kann. Es sind jedoch auch andere Ansätze möglich, wie bereits weiter oben im Rahmen der Kompression erläutert.

Die Dekodierung des ersten Binärworts durch das wenigstens eine zweite Binärwort ist in dem Sinne zu verstehen, dass das erste Binärwort auf der Grundlage des wenigstens einen zweiten Binärworts ermittelt wird. Dies kann als eine Entschlüsselung des ersten Binärworts aus dem wenigstens einen zweiten Binärwort interpretiert werden. Umgekehrt ist die Kodierung des ersten Binärworts durch das wenigstens eine zweite Binärwort in dem Sinne zu verstehen, dass das wenigstens eine zweite Binärwort auf der Grundlage des ersten Binärworts ermittelt wird.

Das Ermitteln des nachgebildeten geschätzten Pixelwerts des betreffenden Pixels erfolgt völlig analog zu dem Ermitteln des geschätzten Pixelwerts im Zuge der Komprimierung, wobei bestimmte Informationen, wie etwa Gewichtungsfaktoren für vorbestimmte andere Pixel, z.B. als Bestandteil der Schätzregel während der Dekompression zur Verfügung gestellt werden können. Ein solches zur Verfügungstellen von Informationen ist aus dem Bereich der linearen Prädiktion bekannt.

Nach einer Ausführungsform des Dekompressionsverfahrens wird das erste Binärwort durch das wenigstens eine zweite Binärwort dekodiert, indem das Kodierinformationsbit aus dem wenigstens einen zweiten Binärwort entfernt wird, um das erste Binärwort oder ein Teilwort des ersten Binärworts zu bilden. Das Entfernen eines jeweiligen Kodierinformationsbits wird vorzugsweise in beiden Dekodierungsfällen angewandt, d.h. sowohl bei der Dekodierung durch ein einzelnes zweites Binärwort, als auch bei der Dekodierung durch mehrere zweite Binärwörter.

Es ist möglich, dass das Kodierinformationsbit in einem jeweiligen zweiten Binärwort stets die Position des geringwertigsten Bits besitzt. Nachdem das Kodierinformationsbit entfernt worden ist, bleiben Bits übrig. Diese übrigen Bits können unmittelbar das zu dekodierende erste Binärwort oder ein Teilwort hiervon bilden. Vorzugsweise bilden die übrigen Bits das erste Binärwort, wenn das entfernte Kodierinformationsbit den ersten Wert aufweist und das Kodierinformationsbit des vorherigen zweiten Binärworts ebenfalls den ersten Wert aufweist. Andernfalls bilden die Bits ein Teilwort. Im Fall der Dekodierung durch ein einzelnes zweites Binärwort kann das in der aufsteigender Reihenfolge der übrigen Bits letzte auf Eins gesetzte Bit gleich dem letzten, d.h. dem höchstwertigsten Bit ist. Sofern jedoch in den übrigen Bits nach dem letzten Einserbit noch Nullbits vorhanden sind, können diese Nullbits automatisch abgeschnitten bzw. entfernt werden, sodass das erste Binärwort diese Nullbits nicht umfasst. Auf diese Weise kann das erste Binärwort exakt mit der ersten Länge dekodiert, die bei der vorhergehenden Kodierung zugrunde lag.

Es versteht sich, dass im Rahmen der Dekompression mehrere erste Binärwörter parallel dekodiert werden können, sodass die Dekompression der gesamten Bilddaten wesentlich beschleunigt wird. Hierzu können wie bei der Kompression z.B. Grafikprozessoren eingesetzt werden.

Nach einer weiteren Ausführungsform des Dekompressionsverfahrens wird das erste Binärwort durch die mehreren zweiten Binärwörter dekodiert, indem folgende Schritte ausgeführt werden:
- Identifizieren einer Menge von zweiten Binärwörtern, die den mehreren zweiten Binärwörtern zur Dekodierung des ersten Binärworts entspricht, wobei die zweiten Binärwörter der Menge identifiziert werden, indem beginnend mit einem betreffenden zweiten Binärwort des Bitstroms, dessen Kodierinformationsbit nicht auf den ersten Wert gesetzt ist und das ein erstes Element der Menge bildet, die jeweiligen Kodierinformationsbits der gemäß einer aufsteigenden Reihenfolge des Bitstroms nachfolgenden zweiten Binärwörter ausgewertet werden, um festzustellen, ob die jeweiligen Kodierinformationsbits auf den ersten Wert gesetzt sind, wobei die nachfolgenden zweiten Binärwörter weitere Elemente der Menge bilden, wenn die jeweiligen Kodierinformationsbits nicht auf den ersten Wert gesetzt sind, wobei dasjenige der nachfolgenden zweiten Binärwörter, dessen Kodierinformationsbit auf den ersten Wert gesetzt ist, das letzte Element der Menge bildet,
- Bilden von mehreren Teilwörtern, indem aus jedem der zweiten Binärwörter der Menge zumindest das Kodierinformationsbit entfernt wird, und
- Bilden des ersten Binärworts, indem die mehreren Teilwörter miteinander verkettet werden.

Es versteht sich, dass das Identifizieren der Menge von mehreren zweiten Binärwörtern, das Bilden der Teilwörter sowie das Bilden des ersten Binärworts nicht notwendigerweise für alle beteiligten Wörter hintereinander ausgeführt werden muss. So ist es möglich, dass die zweiten Binärwörter zumindest teilweise parallel verarbeitet werden, um ein jeweiliges erstes Binärwort zu dekodieren. Ferner können zweite Binärwörter in ihrer Reihenfolge des Bitstroms hintereinander bezüglich ihres jeweiligen Kodierinformationsbits ausgewertet werden, um zu entscheiden, ob noch weitere nachfolgende zweite Binärwörter zu berücksichtigen sind oder nicht. Sofern die Auswertung des Kodierinformationsbits ergibt, dass noch wenigstens ein nachfolgendes zweites Binärwort zu berücksichtigen ist, kann bereits ein Teilwort durch Entfernen des betreffenden Kodierinformationsbits gebildet und gespeichert werden. Nachfolgende Teilworte können in derselben Weise gespeichert werden, wobei diese Teilwörter bereits miteinander verkettet werden können, um das erste Binärwort sukzessive durch eine Aneinanderreihung von Teilwörtern zu bilden. Mit anderen Worten können die Schritte zum Dekodieren bezüglich aufeinanderfolgender zweiter Binärwörter auch alternierend ineinander verschachtelt sein.

Vorzugsweise werden die Teilworte in einer Reihenfolge verkettet, die umgekehrt zu der aufsteigenden Reihenfolge des Bitstroms ist, in der die Teilworte erscheinen. Beispielsweise kann das erste Element der Menge (ein zweites Binärwort mit einem nicht auf den ersten Wert gesetzten Kodierinformationsbit) die niederwertigsten Bits für das zu dekodierende erste Binärwort enthalten. Das letzte Element der Menge (ein zweites Binärwort mit einem auf den ersten Wert gesetzten Kodierinformationsbit) kann dagegen die höchstwertigsten Bits für das zu dekodierende erste Binärwort enthalten. Dementsprechend kann die Menge eine "Identifikationsreihenfolge" aufweise, die der aufsteigenden Reihenfolge der zweiten Binärwörter in dem Bitstrom entspricht, in der die zweiten Binärwörter identifiziert worden sind. Demgegenüber können die gebildeten Teilwörter in der umgekehrten Reihenfolge miteinander verkettet bzw. aneinander gereiht werden. Dies besitzt den Vorteil, dass einerseits ein betreffendes erstes Binärwort durch die mehreren zweiten Binärwörter sequentiell kodiert werden kann, d.h. es muss nicht im Vorhinein klar sein, wie viele zweite Binärwörter benötigt werden. Andererseits führt die umgekehrte Reihenfolge der zweiten Binärwörter in dem Bitstrom dazu, dass unmittelbar mit einem "ersten" zweiten Binärwort (erstes Element der Menge) festgestellt werden kann, dass mehrere zweite Binärwörter zur Dekodierung benötigt werden. Hierbei muss ebenfalls nicht sofort klar sein, wieviele zweite Binärwörter zu berücksichtigen sind. Vielmehr kann die Menge von zweiten Binärwörtern sequentiell identifiziert werden, indem die jeweiligen Kodierinformationsbits ausgewertet werden.

Wie bereits oben angedeutet können zusätzlich zu dem Kodierinformationsbit aus dem letzten der gebildeten Teilwörter nullwertige Bits, welche nach dem letzten auf Eins gesetzten Bit ("most significant bit") vorhanden sind, automatisch entfernt werden. Dies ist aber nicht zwingend notwendig.

Es versteht sich, dass Merkmale, die im Zusammenhang mit dem Kompressionsverfahren offenbart sind, in entsprechender bzw. umgekehrter Weise in dem Dekompressionsverfahren verwirklicht sein können. Umgekehrt können auch Merkmale, die im Zusammenhang mit dem Dekompressionsverfahren offenbart sind, in entsprechender bzw. umgekehrter Weise in dem Kompressionsverfahren verwirklicht sein. Ferner können das Kompressionsverfahren und das Dekompressionsverfahren auch hintereinander ausgeführt werden, d.h. die Ausführungsformen können auch miteinander kombiniert werden.

Die Erfindung bezieht sich ferner auf einen Datenträger (Speichermedium) mit auf dem Datenträger gespeicherter Software zur Durchführung des Verfahrens nach einer der hier beschriebenen Ausführungsformen des Kompressionsverfahrens und/oder des Dekompressionsverfahrens. Bei der Software kann es sich auch um Firmware handeln, d.h. um eingebettete Software.

Die Erfindung bezieht sich darüber hinaus auf eine Vorrichtung mit einem Datenträger, insbesondere dem oben genannten Datenträger, und einer Recheneinrichtung, wobei die Recheneinrichtung dazu angepasst ist, die auf dem Datenträger gespeicherte Software auszuführen. Die Recheneinrichtung kann wenigstens einen Grafikprozessor aufweisen und/oder mit wenigstens einem Grafikprozessor verbunden sein, insbesondere um die Software ausführen bzw. die Recheneinrichtung gemäß der Software zu betreiben. Ferner kann die Software allgemein durch ein field programmable gate array (FPGA) implementiert sein. Es versteht sich jedoch, dass die Recheneinrichtung diese Mittel nicht zwingend aufweisen muss und dass das Verfahren auch sonst effizient ausgeführt werden kann.

Die Vorrichtung kann allgemein zum Aufnehmen einer zeitlichen Folge von Einzelbildern ausgebildet sein. Die Vorrichtung kann insbesondere eine Filmkamera sein. Die Recheneinrichtung der Vorrichtung ist vorzugsweise dazu ausgebildet, zumindest eines der Einzelbilder gemäß dem vorstehend geschilderten Kompressionsverfahren zu komprimieren. Im Hinblick auf eine Dekompression der Bilddaten kann die Recheneinrichtung auch dazu ausgebildet sein, einen Bitstrom, der wenigstens eines der Einzelbilder repräsentiert, gemäß dem vorstehend beschriebenen Dekompressionsverfahren zu dekomprimieren. Dies kann insbesondere auch an einer Filmkamera vorteilhaft sein, sodass ein betreffendes Einzelbild z.B. an einer Anzeigevorrichtung der Vorrichtung unmittelbar angezeigt werden kann oder an eine externe Anzeigevorrichtung übertragen werden kann. Die Bilddaten müssen hierbei nicht in unkomprimierter Form bereitgehalten werden, sondern können nach der Aufzeichnung der Bilddaten unmittelbar komprimiert werden. Vorzugsweise werden die Bilddaten in komprimierter Form übertragen, sodass einerseits wenig Bandbreite für die Übertragung benötigt wird (schnelle Übertragung), andererseits aber auch wenig Speicherplatz zur Speicherung der Bilddaten benötigt wird. Beispielsweise können die komprimierten Bilddaten leicht an einen entfernten Server übertragen werden, in dem eine virtuelle Cloud für Bilddaten eingerichtet ist. Durch die hier beschriebenen Verfahren ist eine Kompression bzw. Dekompression sogar in Echtzeit möglich, sodass z.B. Einzelbilder unmittelbar nach ihrer Aufnahme komprimiert und in die Ferne übertragen werden können.

Die Verfahren können allgemein auch in anderen Vorrichtungen verwirklicht werden, z.B. in einem digitalen Mikroskop, welches insbesondere im Medizinbereich etwa zur Durchführung von Operationen eingesetzt werden kann.

Allgemein bezieht sich die Erfindung auch auf Software auf einem Datenträger, wobei die Software zur Durchführung zumindest eines der hierin beschriebenen Verfahren ausgebildet ist.

Die Erfindung wird nachfolgend rein beispielhaft unter Bezugnahme auf die Zeichnungen erläutert, wobei
- Fig. 1: ein schematisches Diagramm zeigt, welches allgemein ein Kodieren eines ersten Binärworts durch wenigstens ein zweites Binärwort veranschaulicht;
- Fig. 2: ein Beispiel einer Kodierung eines ersten Binärworts durch ein einzelnes zweites Binärwort zeigt;
- Fig. 3: ein Beispiel einer Kodierung eines ersten Binärworts durch mehrere zweite Binärwörter zeigt;
- Fig. 4: ein Beispiel einer Dekodierung mehrerer erster Binärwörter durch mehrere zweite Binärwörter eines Bitstroms zeigt.

Im Folgenden werden gleiche oder sich entsprechende Elemente durch dieselben Bezugszeichen gekennzeichnet sofern keine besondere Unterscheidung zwischen konkreten Exemplaren von Elementen notwendig ist.

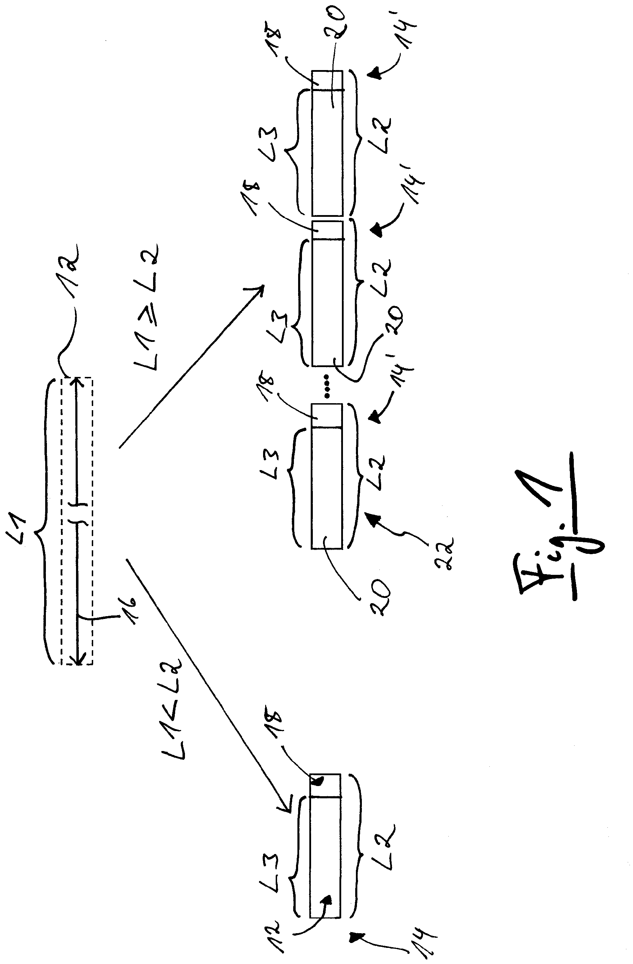

In Fig. 1 ist ein Verfahren zur Kompression von Bilddaten veranschaulicht, in dem ein erstes Binärwort 12 durch wenigstens ein zweites Binärwort 14, 14' kodiert wird. Das erste Binärwort 12 repräsentiert einen Differenzwert eines betreffenden Pixels der Bilddaten, wobei der Differenzwert einer vorbestimmten Relation zwischen einem Pixelwert und einem geschätzten Pixelwert des betreffenden Pixels entspricht (nicht gezeigt). Beispielsweise kann der Differenzwert die Differenz zwischen dem (tatsächlichen) Pixelwert und dem geschätzten Pixelwert repräsentieren. Der geschätzte Pixelwert des betreffenden Pixels kann in Abhängigkeit von dem Pixelwert zumindest eines vorbestimmten anderen Pixels der Bilddaten unter Verwendung wenigstens einer Schätzregel ermittelt werden (nicht gezeigt). Beispielsweise kann der geschätzte Pixelwert als eine gewichtete Kombination der Pixelwerte anderer Pixel gebildet werden, wobei die Gewichtungskoeffizienten z.B. durch die Minimierung des mittleren quadratischen Fehlers zwischen dem Pixelwert und dem geschätzten Pixelwert des betreffenden Pixels ermittelt werden können. Es versteht sich, dass die Bilddaten eine Vielzahl von Pixelwerten umfassen, die jeweils einem Pixel zugeordnet sind. Somit kann zumindest ein Teil der Pixelwerte jeweils in einen zugeordneten Differenzwert überführt werden, der entweder direkt in Form eines ersten Binärworts vorliegt (insbesondere bei Ausführung des Verfahrens auf einem Binärrechner) oder aus einem anderen Zahlensystem in ein erstes Binärwort umgerechnet wird. Somit sind zur Kompression der Bilddaten mehrere erste Binärwörter zu kodieren, wobei zum leichteren Verständnis im Folgenden lediglich ein betreffendes erstes Binärwort 12 betrachtet wird, welches kodiert werden soll.

Das erste Binärwort 12 weist eine erste Länge L1 auf, die eine erste effektive Länge des ersten Binärworts 10 ist. Wenn das erste Binärwort 12 z.B. gleich (001011) ist, dann ist die erste Länge L1 gleich 4, da beginnend mit dem niederwertigsten Bit (das Bit ganz rechts außen in der Bitfolge 001011) das letzte Einserbit an der vierten Stelle ist und damit insbesondere im Binärsystem das höchstwertigste Bit darstellt. Wenn das erste Binärwort 12 gleich (101100) ist, dann ist die erste Länge L1 gleich 6, da das letzte Einserbit an der sechsten Stelle ist (ganz außen links in der Bitfolge 101100). Die erste Länge L1 ist somit im Allgemeinen variabel, nämlich in Abhängigkeit von der Position des letzten Einserbits in einem Binärwort. Dies ist durch den unterbrochenen Pfeil 16 angedeutet.

In Abhängigkeit von der Länge L1 wird das erste Binärwort entweder durch ein einzelnes zweites Binärwort 14 oder durch mehrere zweite Binärwörter 14' kodiert. Die Kodierung erfolgt durch das einzelne zweite Binärwort 14, wenn die erste Länge L1 kleiner als die zweite Länge ist, d.h. L1 <L2 (linker Zweig in Fig. 1). Die Kodierung erfolgt hingegen durch die mehreren zweiten Binärwörter 14', wenn die erste Länge L1 größer oder gleich der zweiten Länge ist, d.h. L1 >L2 oder L1 =L2 (rechter Zweig in Fig. 1).

Die Kodierung durch das einzelne zweite Binärwort 14 (Fall L1 <L2) erfolgt vorzugsweise durch Verkettung des erstes Binärworts 12 mit einem einzelnen Kodierinformationsbit 18, das auf den Wert Null gesetzt wird und auf diese Weise anzeigt, dass das betreffende erste Binärwort 12 vollständig durch ein einzelnes zweites Binärwort 14 kodiert worden ist. Das zweite Binärwort 14 besitzt definitionsgemäß die zweite Länge L2, sodass die Differenz zwischen der zweiten Länge L2 und der Anzahl der Kodierinformationsbits 18 allgemein eine dritte Länge L3 ist, welche kleiner als die zweite Länge L2 ist. Da in Fig. 1 beispielhaft von einem einzigen Kodierinformationsbit 18 ausgegangen wird, ist L3=L2-1 .

Sofern die erste Länge L1 gleich der dritten Länge L3 ist, ist die Kodierung des ersten Binärworts 12 lediglich die Verkettung bzw. Aneinanderreihung mit dem Kodierinformationsbit 18. Sofern die erste Länge L1 jedoch kleiner als die dritte Länge L3 ist, wird das erste Binärwort 12 um eine Anzahl von Nullen ergänzt, sodass das zweite Binärwort 14 nach der Verkettung mit dem Kodierinformationsbit 18 im Ergebnis die zweite Länge L2 aufweist. Vorzugsweise werden die Nullbits an der Seite des höchstwertigsten Bits angehängt. Es ist auch möglich, dass das ein zweites Binärwort 14 mit Nullbits der Länge L2 definiert und ein Teil dieser Nullbits gemäß dem Kodierinformationsbit 18 und den L1 Bits des ersten Binärworts 12 überschrieben wird.

Im Falle der Kodierung durch mehrere zweite Binärwörter 14' (Fall L1 >L2 oder L1=L2), wird das erste Binärwort 12 zunächst in mehrere Teilwörter 20 der Länge L3 zerlegt, die jeweils mit einem Kodierinformationsbit 18 verkettet werden, um die zweiten Binärwörter 14' zu bilden (vgl. Fig. 1). Die Kodierinformationsbits 18 werden in der Regel auf Eins gesetzt, um anzuzeigen, dass das erste Binärwort 12 noch nicht vollständig kodiert worden ist. Eine Ausnahme hiervon ist das gemäß einer aufsteigenden Reihenfolge der zweiten Binärwörter 14' letzte zweite Binärwort 22 (vgl. Fig. 1), das sich von den übrigen zweiten Binärwörtern 14' dadurch unterscheidet, dass das Kodierinformationsbit 18 auf Null gesetzt wird. Hierdurch wird angezeigt, dass das erste Binärwort 12 mit dem letzten zweiten Binärwort 22 und den vorhergehenden zweiten Binärwörtern 14' vollständig kodiert worden ist.

Es versteht sich, dass die Werte für das Kodierinformationsbit 18 auch invertiert werden können.

Das Kodierverfahren wird nachfolgend anhand von konkreten Zahlenbeispielen weiter erläutert.

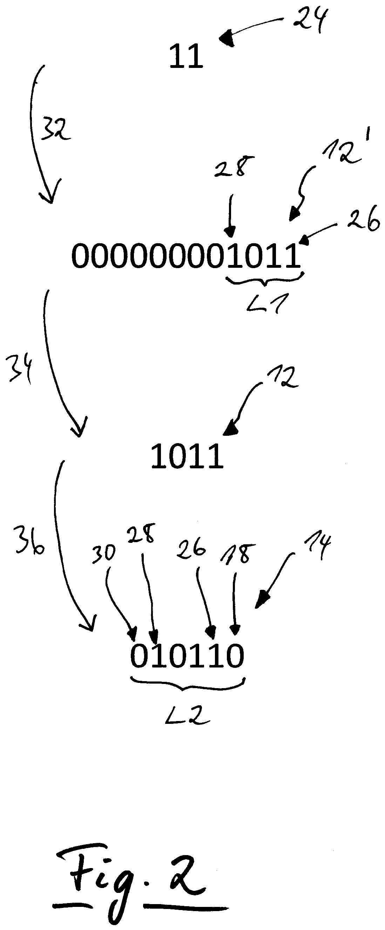

In Fig. 2 wird von einem Differenzwert 24 ausgegangen, der im Dezimalsystem den Wert 11 besitzt. Der Differenzwert 24 wird durch ein erstes Binärwort 12' repräsentiert, welches in Fig. 2 zwar 12 Bits umfasst, aber eine effektive Länge L1=4 besitzt, da das in der aufsteigenden Reihenfolge der Bits letzte Einserbit das vierte Bit ist (Schritt 32 in Fig. 2). Die aufsteigende Reihenfolge ist in Fig. 2 von rechts nach links definiert, d.h. vom niederwertigsten Bit 26 zum höchstwertigsten Bit 28.

Diejenigen Bits des ersten Binärworts 12', die die erste Länge L1 definieren, bilden nun ein erstes Binärwort 12, welches der Kodierung zugrunde gelegt wird (Schritt 34 in Fig. 2). Wie aus Fig. 2 ersichtlich ist, unterscheiden sich das erste Binärwort 12 und das erste Binärwort 12' lediglich durch die jenseits des letzten Einserbits im ersten Binärwort 12' vorhandenen Nullen.

Das erste Binärwort 12 wird nun durch ein einzelnes zweites Binärwort 14 kodiert, das die zweite Länge L2=6 aufweist (Schritt 36 in Fig. 2). Da L1 <L2 ist, wird das Kodierinformationsbit 18, welches mit dem ersten Binärwort 12 an der Seite des niederwertigsten Bits 26 verkettet wird, auf den Wert Null gesetzt. Da L2-1>L1 ist, wird an der Seite des höchstwertigsten Bits 28 des ersten Binärworts 12 noch ein Nullbit 30 angehängt, sodass das zweite Binärwort 14 die Länge L2 aufweist. Mit anderen Worten wird das erste Binärwort 12 um eine Anzahl von Nullbits 30 ergänzt, um die zweite Länge L2 unabhängig von der ersten Länge L1 zu gewährleisten.

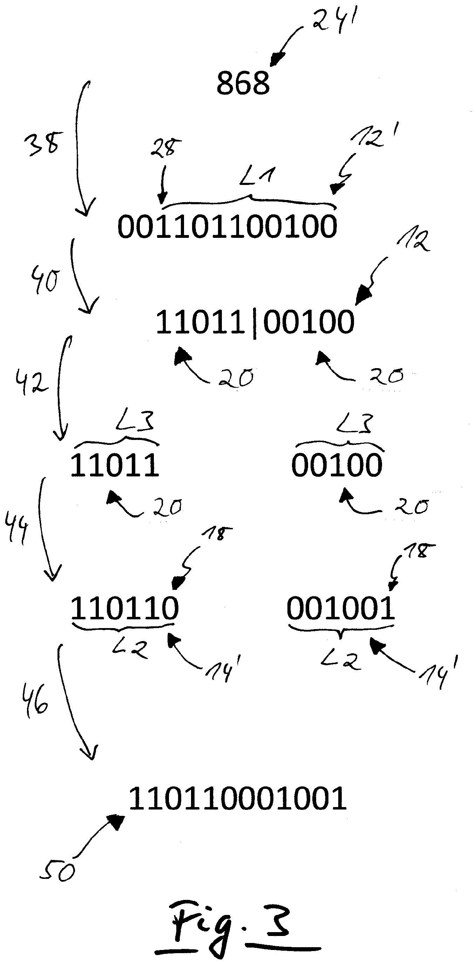

In Fig. 3 ist ein weiteres Kodierungsbeispiel gezeigt, bei dem von einem höheren Differenzwert 24' ausgegangen wird, der im Dezimalsystem den Wert 868 aufweist und durch ein erstes Binärwort 12' repräsentiert wird, welches zwar 12 Bits umfasst, aber eine effektive Länge L1=10 besitzt, da das in der aufsteigenden Reihenfolge der Bits letzte Einserbit 28 das zehnte Bit ist (Schritt 38 in Fig. 3). Ein erstes Binärwort 12 mit der effektiven Länge L1 ergibt sich in Schritt 40 durch Abschneiden der nach dem höchstwertigsten Bit 28 folgenden Nullbits. Da ebenso wie in Fig. 2 eine Kodierung durch zweite Binärwörter 14' der Länge L2=6 erfolgen soll, ist für das erste Binärwort 12 wegen L1>L2 eine Kodierung durch mehrere zweite Binärwörter 14' vorgesehen. Hierzu wird das erste Binärwort 12 in Teilwörter 20 zerlegt (Schritt 40 in Fig. 3), wobei in der aufsteigenden Reihenfolge der Bits des ersten Binärworts 12 jeweils L3 Bits zu einem Teilwort 20 zusammengefasst werden (Schritte 40 und 42 in Fig. 3). In Fig. 3 kann das Binärwort 12 vollständig in zwei Teilwörter 20 der Länge L3 zerlegt werden. Sofern die Länge L1 nicht ohne Rest durch L3 teilbar ist, werden die restlichen Bits durch ein weiteres Teilwort 20 abgebildet, welches um Nullbits ergänzt wird, sodass das betreffende Teilwort 20 ebenfalls die Länge L3 aufweist (nicht gezeigt).

Die Teilwörter 20 werden nun jeweils analog wie im Beispiel der Fig. 2 mit einem Kodierinformationsbit 18 verkettet, wobei das Kodierinformationsbit 18 des ersten der beiden Teilwörter 20 (rechts in Fig. 3) auf Eins gesetzt wird (erstes Binärwort 12' ist noch nicht vollständig kodiert) und wobei das Kodierinformationsbit 18 des zweiten der beiden Teilwörter 20 (links in Fig. 3) auf Null gesetzt wird (erstes Binärwort 12' ist vollständig kodiert), vgl. Schritt 44 in Fig. 3. Auf diese Weise ergeben sich mehrere zweite Binärwörter 14' durch die das erste Binärwort 12' kodiert wird. Das zweite bzw. linke der beiden Binärwörter 14' entspricht dem letzten zweiten Binärwort 22 in Fig. 1. Die beiden zweiten Binärwörter 14' können dann verkettet werden, um einen Bitstrom 50 bzw. einen Teil eines Bitstroms zu bilden, vgl. Schritt 46 in Fig. 3. Es ist auch möglich, die Reihenfolge der beiden zweiten Binärwörter 14' zu vertauschen. Wenn der Bitstrom 50 z.B. von links nach rechts eingelesen wird, ist bereits durch das in dieser Reihenfolge erste Kodierinformationsbit 18, welches dann den Wert Eins besitzt, angezeigt, dass zur Dekodierung noch weitere zweite Binärwörter 14' zu berücksichtigen sind.

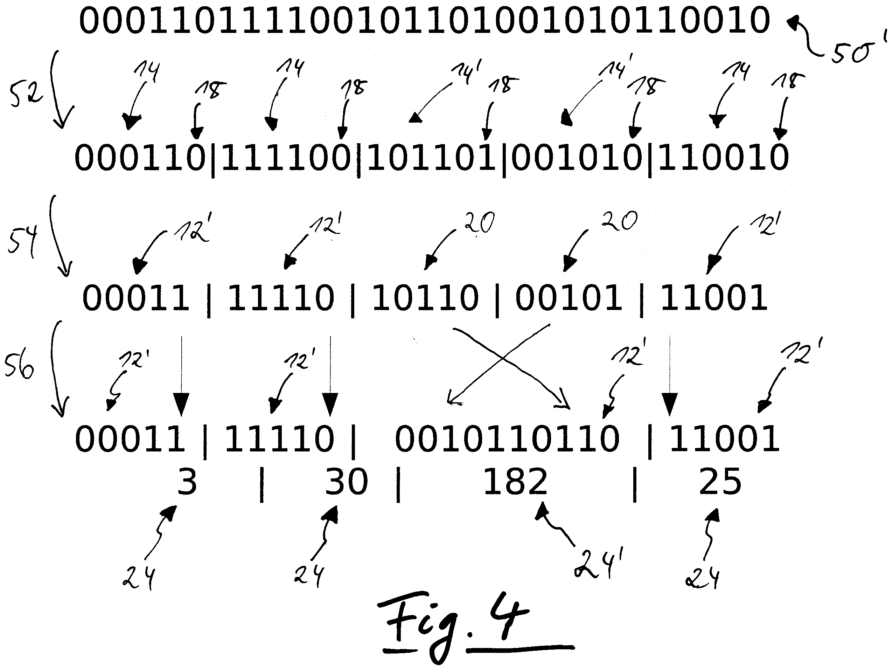

In Fig. 4 ist ein Beispiel zur Dekodierung von mehreren ersten Binärwörtern 12' durch mehrere zweite Binärwörter 14, 14' dargestellt, wobei die Dekodierung Bestandteil eines Verfahren zur Dekompression von Bilddaten ist, die einen Bitstrom 50' mit einer Vielzahl von Bits umfassen. Der Bitstrom 50' wird in mehrere zweite Binärwörter 14, 14' zerlegt, die jeweils die Länge L2=6 aufweisen (Schritt 52). Das Einlesen des Bitstroms 50' erfolgt hierbei in einer aufsteigenden Reihenfolge, wobei die Bits beginnend mit dem linken äußeren Bit des Bitstroms 50' in Fig. 4 sukzessive bis zum äußeren rechten Bit eingelesen werden. Eine umgekehrte Reihenfolge ist jedoch auch möglich. Sodann wird das Kodierinformationsbit 18 jedes der zweiten Binärwörter 14, 14' ausgewertet. Für die zweiten Binärwörter 14 ist das Kodierinformationsbit jeweils gleich Null, d.h. die zweiten Binärwörter 14 dienen jeweils zur Dekodierung eines einzelnen ersten Binärworts 12', wobei hierfür lediglich das Kodierinformationsbit 18 entfernt wird (schritte 54 und 56).

In Fig. 4 weist das Kodierinformationsbit 18 des in der Mitte des Bitstroms 50' angeordneten zweiten Binärworts 14' jedoch den Wert Eins auf. Hierdurch wird angezeigt, dass ein erstes Binärwort 12 durch dieses zweite Binärwort 14' sowie wenigstens ein weiteres zweites Binärwort 14' zu dekodieren ist. Das Kodierinformationsbit 18 des nachfolgenden zweiten Binärworts 14' weist wieder den Wert Null auf. Hierdurch wird angezeigt, dass zur Dekodierung des ersten Binärworts 12' nur noch dieses nachfolgende zweite Binärwort 14' zu berücksichtigen ist. Auf diese Weise wird also eine Menge von zweiten Binärwörtern 14' zur Dekodierung des ersten Binärworts 12' identifiziert. Sodann werden Teilwörter 20 gebildet, indem die Kodierinformationsbits 18 aus den zweiten Binärwörtern 14' entfernt werden (Schritt 54). Die Teilworte werden danach verkettet, und zwar in umgekehrter Reihenfolge der Teilwörter 20. Da in dem Beispiel von Fig. 4 nur zwei Teilwörter 20 vorhanden sind, werden diese also zuerst vertauscht und dann verkettet (Schritt 56). Das Vertauschen ergibt sich aus dem Umstand, dass das in der aufsteigenden Reihenfolge erste zweite Binärwort 14', dessen Kodierinformationsbit 18 den Wert Eins aufweist, niederwertige Bits des zu dekodierenden ersten Binärworts enthält, wohingegen das nachfolgende zweite Binärwort 14' höherwertige Bits enthält.

Die so dekodierten ersten Binärwörter 12' können sodann in Differenzwerte 24,24' umgewandelt werden und in Abhängigkeit von nachgebildeten geschätzten Pixelwerten in die dekomprimierten Pixelwerte überführt werden. Die dekomprimierten Pixelwerte können dann auf einer Anzeigevorrichtung zum Anzeigen eines Einzelbilds für einen Benutzer verwendet werden.

### Bezugszeichenliste

- 12, 12': erstes Binärwort
- 14, 14': zweites Binärwort
- 16: Länge
- 18: Kodierinformationsbit
- 20: Teilwort
- 22: letztes zweites Binärwort
- 24, 24': Differenzwert
- 26: niederwertigstes Bit
- 28: höchstwertigstes Bit
- 30: Nullbit
- 32, 34, 36: Schritt
- 38, 40, 42: Schritt
- 44,46: Schritt
- 50, 50': Bitstrom
- 52, 54, 56: Schritt

- L1: erste Länge
- L2: zweite Länge
- L3: dritte Länge

## Patentansprüche

1. Verfahren zur Kompression von Bilddaten, die eine Vielzahl von Pixelwerten umfassen, die einem jeweiligen Pixel zugeordnet sind, wobei für zumindest einige Pixel die Pixelwerte gemäß den folgenden Schritten komprimiert werden:
- Ermitteln eines geschätzten Pixelwerts des betreffenden Pixels in Abhängigkeit von dem Pixelwert zumindest eines vorbestimmten anderen Pixels unter Verwendung wenigstens einer Schätzregel;
- Bilden eines Differenzwerts (24, 24') des betreffenden Pixels, der einer vorbestimmten Relation zwischen dem Pixelwert und dem geschätzten Pixelwert des betreffenden Pixels entspricht, wobei der Differenzwert (24, 24') durch ein erstes Binärwort (12, 12') repräsentiert wird, das eine erste Länge (L1) aufweist, wobei die erste Länge (L1) eine effektive Länge des ersten Binärworts (12, 12') ist;
**gekennzeichnet durch**:
- Kodieren des ersten Binärworts (12, 12') durch wenigstens ein zweites Binärwort (14, 14'), wobei das wenigstens eine zweite Binärwort (14, 14') eine zweite Länge (L2) aufweist, die eine vorbestimmte Länge des jeweiligen zweiten Binärworts (14, 14') ist,
wobei die erste Länge (L1) mit der zweiten Länge (L2) verglichen wird, um festzustellen, ob die erste Länge (L1) kleiner als die zweite Länge (L2) ist, wobei das erste Binärwort (12, 12') durch ein einzelnes zweites Binärwort (14) vollständig kodiert wird, wenn die erste Länge (L1) kleiner als die zweite Länge (L2) ist, und
wobei andernfalls das erste Binärwort (12, 12') durch mehrere zweite Binärwörter (14') vollständig kodiert wird,
wobei die zweite Länge (L2) für eine jeweilige Pixelgruppe gleich ist, wobei die jeweilige Pixelgruppe einen lokalen Bildbereich in den Bilddaten repräsentiert, und wobei die zweite Länge (L2) proportional zu der durchschnittlichen ersten Länge der ersten Binärwörter (L1) der betreffenden Pixelgruppe gewählt wird.

2. Verfahren nach Anspruch 1,
wobei das wenigstens eine zweite Binärwort (14, 14') wenigstens ein Kodierinformationsbit (18) umfasst, wobei das Kodierinformationsbit (18) auf einen ersten Wert gesetzt wird, wenn das erste Binärwort (12, 12') durch ein einzelnes zweites Binärwort (14) kodiert wird, und wobei andernfalls das Kodierinformationsbit (18) von wenigstens einem der mehreren zweiten Binärwörter (14') auf einen zweiten Wert gesetzt wird.

3. Verfahren nach Anspruch 2,
wobei das erste Binärwort (12, 12') durch das wenigstens eine zweite Binärwort (14, 14') kodiert wird, indem das Kodierinformationsbit (18) dem ersten Binärwort (12, 12') oder einem Teilwort (20) des ersten Binärworts (12, 12') hinzugefügt wird, um das wenigstens eine zweite Binärwort (14, 14') zu bilden, wobei das Kodierinformationsbit (18) in dem zweiten Binärwort (14, 14') eine vorbestimmte Position aufweist, wobei vorzugsweise, wenn die Summe der ersten Länge (L1) und der Anzahl des wenigstens einen Kodierinformationsbits (18) kleiner als die zweite Länge (L2) ist, das erste Binärwort (12, 12') mit einer Anzahl von nullwertigen Bits (30) verkettet wird, sodass das wenigstens eine zweite Binärwort (14, 14') die zweite Länge (L2) aufweist;
und/oder
wobei das erste Binärwort (12, 12') durch das einzelne zweite Binärwort (14) kodiert wird, indem das erste Binärwort (12, 12') und das Kodierinformationsbit (18) miteinander verkettet werden, um das einzelne zweite Binärwort (14) zu bilden.

4. Verfahren nach Anspruch 2 oder Anspruch 3,
wobei das erste Binärwort (12, 12') durch die mehreren zweiten Binärwörter (14') kodiert wird, indem das erste Binärwort (12, 12') in mehrere Teilworte (20) zerlegt wird, wobei jedes der mehreren Teilworte (20) eine dritte Länge (L3) aufweist, die eine vorbestimmte Länge eines jeweiligen Teilworts (20) und kleiner als die zweite Länge (L2) ist, wobei jedem der mehreren Teilwörter (20) eines der mehreren zweiten Binärwörter (14') zugeordnet wird, und wobei jedes der mehreren Teilwörter (20) mit dem Kodierinformationsbit (18) des zugeordneten zweiten Binärworts (14') verkettet wird, um das zugeordnete zweite Binärwort (14') zu bilden.

5. Verfahren nach Anspruch 4,
wobei das Zerlegen des ersten Binärworts (12, 12') in die mehreren Teilwörter in einer aufsteigender Reihenfolge der Bits des ersten Binärwortes (12, 12') erfolgt, wobei ein jeweiliges Teilwort (20) durch eine Anzahl von Bits des ersten Binärworts (12, 12') gebildet wird, die gleich der dritten Länge (L3) ist, wobei, wenn die dritte Länge (L3) kein ganzzahliges Vielfaches der ersten Länge (L1) ist, das gemäß der aufsteigenden Reihenfolge letzte der mehreren Teilwörter (20) durch eine Verkettung einer Anzahl von nullwertigen Bits mit einer Restanzahl von Bits des ersten Binärworts (12, 12') gebildet wird, sodass die Summe der Anzahl von nullwertigen Bits und der Restanzahl von Bits des ersten Binärworts (12, 12') gleich der dritten Länge (L3) ist;
und/oder
wobei sich die zweite Länge (L2) und die dritte Länge (L3) genau um die Anzahl des wenigstens einen Informationsbits (18) unterscheiden.

6. Verfahren nach Anspruch 5,
wobei das Kodierinformationsbit (18), welches gemäß der aufsteigenden Reihenfolge mit dem letzten der mehreren Teilwörter (20) verkettet wird, auf den ersten Wert gesetzt wird, und das jeweilige Informationsbit (18) der übrigen Teilwörter (20) auf den zweiten Wert gesetzt wird;

7. Verfahren nach einem der vorhergehenden Ansprüche,
wobei mehrere Pixelgruppen gebildet werden, und zwar in Abhängigkeit von der Ähnlichkeit der Differenzwerte (24, 24') der Pixel derart, dass die Differenzwerte (24, 24') der Pixel einer betreffenden Pixelgruppe zueinander ähnlicher sind als zu den Differenzwerten (24, 24') der Pixel einer anderen Pixelgruppe.

8. Verfahren nach einem der vorhergehenden Ansprüche,
wobei, wenn das erste Binärwort (12, 12') durch mehrere zweite Binärwörter (14') vollständig kodiert wird, die zweite Länge (L2) für die mehreren zweiten Binärwörter (14, 14') konstant oder zwischen den mehreren zweiten Binärwörtern (14, 14') unterschiedlich ist;
und/oder
wobei der Schritt des Kodierens des ersten Binärworts (12, 12') durch wenigstens ein zweites Binärwort (14, 14') einem ersten Kodierverfahren entspricht, wobei für zumindest einige weitere Pixel, die nicht gemäß dem ersten Kodierverfahren kodiert werden, das erste Binärwort (12, 12') gemäß einem zweiten Kodierverfahren kodiert wird;
und/oder
wobei die Bilddaten Pixelwerte mehrerer voneinander verschiedener Farben umfassen, wobei das zumindest eine vorbestimmte andere Pixel nicht unmittelbar benachbart zu dem betreffenden Pixel angeordnet ist, und wobei die Pixelwerte des betreffenden Pixels und des zumindest einen vorbestimmten anderen Pixels dieselbe Farbe aufweisen;
und/oder
wobei die Bilddaten Pixelwerte mehrerer voneinander verschiedener Farben umfassen, wobei das Ermitteln des geschätzten Pixelwerts des betreffenden Pixels in Abhängigkeit von dem jeweiligen Pixelwert mehrerer vorbestimmter anderer Pixel erfolgt, wobei ein Teil dieser Pixel unmittelbar benachbart zu dem betreffenden Pixel angeordnet ist und die Pixelwerte dieses Teils eine andere Farbe aufweisen als der Pixelwert des betreffenden Pixels, und wobei ein anderer Teil der vorbestimmten anderen Pixel nicht unmittelbar benachbart zu dem betreffenden Pixel angeordnet ist und die Pixelwerte dieses anderen Teils dieselbe Farbe aufweisen wie der Pixelwert des betreffenden Pixels.

9. Verfahren nach einem der vorhergehenden Ansprüche,
wobei die Pixel in einer Anordnung von mehreren Zeilen vorgesehen sind, wobei die Pixelwerte zeilenweise komprimiert werden, und wobei das Ermitteln des geschätzten Pixelwerts des betreffenden Pixels in Abhängigkeit von dem jeweiligen Pixelwert mehrerer vorbestimmter anderer Pixel erfolgt, wobei die vorbestimmten anderen Pixel in der Zeile des betreffenden Pixels und/oder in einer bereits komprimierten Zeile angeordnet sind, oder wobei die vorbestimmten anderen Pixel ausschließlich in der Zeile des betreffenden Pixels angeordnet sind;
und/oder
wobei die Bilddaten ein Einzelbild aus einer zeitlichen Abfolge von mehreren Einzelbildern repräsentieren;
und/oder
wobei das Verfahren dazu ausgebildet ist, die Bilddaten verlustfrei zu komprimieren;
und/oder
wobei der Differenzwert gemäß einer Differenzwert-Quantisierungsregel quantisiert wird, wobei das erste Binärwort den quantisierten Differenzwert repräsentiert;
und/oder
wobei die Differenzwerte (24, 24') mehrerer betreffender Pixel, die jeweils durch ein erstes Binärwort (12, 12') repräsentiert werden, parallel kodiert werden.

10. Verfahren zur Kompression und Dekompression von Bilddaten, wobei die Bilddaten gemäß einem Verfahren nach einem der vorhergehenden Ansprüche komprimiert werden und einen Bitstrom (50, 50') mit einer Vielzahl von Bits umfassen, wobei der Bitstrom (50, 50') eine Vielzahl von komprimierten Pixelwerten repräsentiert, die einem jeweiligen Pixel zugeordnet sind,
wobei das Verfahren zur Dekompression folgende Schritte umfasst:
- Zerlegen des Bitstroms (50, 50') in eine Vielzahl zweiter Binärwörter (14, 14'), wobei jedes der zweiten Binärwörter (14, 14') eine zweite Länge (L2) aufweist, die eine vorbestimmte Länge des jeweiligen zweiten Binärworts (14, 14') ist, wobei jedes der zweiten Binärwörter (14, 14') an einer vorbestimmten Position in dem zweiten Binärwort (14, 14') wenigstens ein Kodierinformationsbit (18) aufweist;
- Dekodieren wenigstens eines ersten Binärworts (12, 12') durch wenigstens eines der zweiten Binärwörter (14, 14'), wobei das erste Binärwort (12, 12') einen Differenzwert (24, 24') repräsentiert, der einer vorbestimmten Relation zwischen einem Pixelwert eines betreffenden Pixels und einem geschätzten Pixelwert des betreffenden Pixels entspricht,
wobei festgestellt wird, ob das Kodierinformationsbit (18) des wenigstens einen der zweiten Binärwörter (14, 14') auf einen ersten Wert gesetzt ist, wobei das erste Binärwort (12, 12') durch ein einzelnes der zweiten Binärwörter (14) vollständig dekodiert wird, wenn das Kodierinformationsbit (18) des einzelnen der zweiten Binärwörter (14) auf den ersten Wert gesetzt ist, und wobei andernfalls das erste Binärwort (12, 12') durch mehrere der zweiten Binärwörter (14') vollständig dekodiert wird;
- Ermitteln eines nachgebildeten geschätzten Pixelwerts des betreffenden Pixels in Abhängigkeit von zumindest einem zuvor dekomprimierten Pixelwert, der dem zumindest einen vorbestimmten anderen Pixel entspricht, unter Verwendung einer Schätzregel; und
- Ermitteln eines dekomprimierten Pixelwerts des betreffenden Pixels in Abhängigkeit von dem ersten dekodierten Binärwort (12, 12') und dem nachgebildeten geschätzten Pixelwert des betreffenden Pixels.

11. Verfahren nach Anspruch 10,
wobei das erste Binärwort (12, 12') durch das wenigstens eine der zweiten Binärwörter (14, 14') dekodiert wird, indem das Kodierinformationsbit (18) aus dem wenigstens einen der zweiten Binärwörter (14, 14') entfernt wird, um das erste Binärwort (12, 12') oder ein Teilwort (20) des ersten Binärworts (12, 12') zu bilden;
und/oder
wobei mehrere erste Binärwörter (12, 12') parallel dekodiert werden;
und/oder
wobei das erste Binärwort (12, 12') durch die mehreren zweiten Binärwörter (14, 14') dekodiert wird, indem folgende Schritte ausgeführt werden:
- Identifizieren einer Menge von zweiten Binärwörtern (14'), die den mehreren der zweiten Binärwörter (14') zur Dekodierung des ersten Binärworts (12, 12') entsprechen, wobei die zweiten Binärwörter (14') der Menge identifiziert werden, indem beginnend mit einem betreffenden zweiten Binärwort (14') des Bitstroms (50'), dessen Kodierinformationsbit (18) nicht auf den ersten Wert gesetzt ist und das ein erstes Element der Menge bildet, die jeweiligen Kodierinformationsbits (18) der gemäß einer aufsteigenden Reihenfolge des Bitstroms (50') nachfolgenden zweiten Binärwörter (14') ausgewertet werden, um festzustellen, ob die jeweiligen Kodierinformationsbits (18) auf den ersten Wert gesetzt sind, wobei die nachfolgenden zweiten Binärwörter (14') weitere Elemente der Menge bilden, wenn die jeweiligen Kodierinformationsbits (18) nicht auf den ersten Wert gesetzt sind, wobei dasjenige der nachfolgenden zweiten Binärwörter (14'), dessen Kodierinformationsbit (18) auf den ersten Wert gesetzt ist, das letzte Element der Menge bildet;
- Bilden von mehreren Teilwörtern (20), indem aus jedem der zweiten Binärwörter (14') der Menge zumindest das Kodierinformationsbit (18) entfernt wird;
- Bilden des ersten Binärworts (12, 12'), indem die mehreren Teilwörter (20) miteinander verkettet werden.

12. Datenträger mit auf dem Datenträger gespeicherter Software, umfassend Befehle, die bei der Ausführung der Software durch einen Computer diesen veranlassen, das Verfahren nach einem der Ansprüche 1 bis 9 und/oder nach einem der Ansprüche 10 bis 11 auszuführen.

13. Vorrichtung mit einem Datenträger nach Anspruch 12 und mit einer Recheneinrichtung, wobei die Recheneinrichtung dazu angepasst ist, die auf dem Datenträger gespeicherte Software auszuführen;
wobei die Recheneinrichtung vorzugsweise wenigstens einen Grafikprozessor aufweist und/oder mit wenigstens einem Grafikprozessor verbunden ist;
und/oder
wobei die Vorrichtung vorzugsweise zum Aufnehmen einer zeitlichen Folge von Einzelbildern ausgebildet ist, insbesondere wobei die Vorrichtung eine Bewegtbildkamera ist, wobei die Recheneinrichtung dazu ausgebildet ist, zumindest eines der Einzelbilder gemäß dem Verfahren nach einem der Ansprüche 1 bis 9 zu komprimieren und/oder einen Bitstrom, der wenigstens eines der Einzelbilder repräsentiert, gemäß dem Verfahren nach einem der Ansprüche 10 bis 11 zu dekomprimieren.

14. Software auf einem Datenträger, umfassend Befehle, die bei der Ausführung der Software durch einen Computer diesen veranlassen, das Verfahren nach einem der Ansprüche 1 bis 9 und/oder nach einem der Ansprüche 10 bis 11 auszuführen.

## Claims

1. A method of compressing image data that comprise a plurality of pixel values which are associated with a respective pixel, wherein the pixel values are compressed for at least some pixels according to the following steps:
- determining an estimated pixel value of the respective pixel in dependence on the pixel value of at least one predetermined other pixel while using at least one estimation rule;
- forming a difference value (24, 24') of the respective pixel that corresponds to a predetermined relation between the pixel value and the estimated pixel value of the respective pixel, with the difference value (24, 24') being represented by a first binary word (12, 12') which has a first length (L1), with the first length (L1) being an effective length of the first binary word (12, 12'),
**characterized by**:
- encoding the first binary word (12, 12') by at least one second binary word (14, 14'), with the at least one second binary word (14, 14') having a second length (L2) that is a predetermined length of the respective second binary word (14, 14'),
wherein the first length (L1) is compared with the second length (L2) to determine whether the first length (L1) is smaller than the second length (L2);
wherein the first binary word (12, 12') is completely encoded by a single second binary word (14) when the first length (L1) is smaller than the second length (L2); and
wherein the first binary word (12, 12') is otherwise completely encoded by a plurality of second binary words (14'),
wherein the second length (L2) is the same for a respective pixel group, wherein the respective pixel group represents a local image region in the image data, and wherein the second length (L2) is selected as proportional to the average first length of the first binary words (L1) of the respective pixel group.

2. A method according to claim 1,
wherein the at least one second binary word (14, 14') comprises at least one encoding information bit (18); wherein the encoding information bit (18) is set to a first value when the first binary word (12, 12') is encoded by a single second binary word (14); and wherein otherwise the encoding information bit (18) of at least one of the plurality of second binary words (14') is set to a second value.

3. A method according to claim 2,
wherein the first binary word (12, 12') is encoded by the at least one second binary word (14, 14') in that the encoding information bit (18) is appended to the first binary word (12, 12') or to a partial word (20) of the first binary word (12, 12') to form the at least one second binary word (14, 14'), wherein the encoding information bit (18) has a predetermined position in the second binary word (14, 14'), wherein, preferably, if the sum of the first length (L1) and the number of the at least one encoding information bit (18) is smaller than the second length (L2), the first binary word (12, 12') is concatenated with a number of zero-value bits (30) so that the at least one second binary word (14, 14') has the second length (L2);
and/or
wherein the first binary word (12, 12') is encoded by the single second binary word (14) in that the first binary word (12, 12') and the encoding information bit (18) are concatenated with one another to form the single second binary word (14).

4. A method according to claim 2 or 3,
wherein the first binary word (12, 12') is encoded by the plurality of second binary words (14') in that the first binary word (12, 12') is segmented into a plurality of partial words (20); wherein each of the plurality of partial words (20) has a third length (L3) that is a predetermined length of a respective partial word (20) and that is smaller than the second length (L2); wherein one of the plurality of second binary words (14') is associated with each of the plurality of partial words (20); and wherein each of the plurality of partial words (20) is concatenated with the encoding information bit (18) of the associated second binary word (14') to form the associated second binary word (14').

5. A method according to claim 4,
wherein the segmentation of the first binary word (12, 12') into the plurality of partial words takes place in an ascending order of the bits of the first binary word (12, 12'); wherein a respective partial word (20) is formed by a number of bits of the first binary word (12, 12') that is equal to the third length (L3); wherein, if the third length (L3) is not a whole number multiple of the first length (L1), the last of the plurality of partial words (20) according to the ascending order is formed by a concatenation of a number of zero-value bits with a residual number of bits of the first binary word (12, 12') so that the sum of the number of zero-value bits and of the residual number of bits of the first binary word (12, 12') is equal to the third length (L3);
and/or
wherein the second length (L2) and the third length (L3) differ exactly by the number of the at least one information bit (18).

6. A method according to claim 5,
wherein the encoding information bit (18) that is concatenated with the last of the plurality of partial words (20) according to the ascending order is set to the first value; and the respective information bit (18) of the remaining partial words (20) is set to the second value.

7. A method according to any one of the preceding claims,
wherein a plurality of pixel groups are formed, and indeed in dependence on the similarity of the difference values (24, 24') of the pixels such that the difference values (24, 24') of the pixels of a respective pixel group are more similar to one another than to the difference values (24, 24') of the pixels of a different pixel group.

8. A method according to any one of the preceding claims,
wherein, if the first binary word (12, 12') is completely encoded by a plurality of second binary words (14'), the second length (L2) for the plurality of second binary words (14, 14') is constant or differs between the plurality of second binary words (14, 14');
and/or
wherein the step of encoding the first binary word (12, 12') by at least one second binary word (14, 14') corresponds to a first encoding method, wherein, for at least some further pixels that are not encoded according to the first encoding method, the first binary word (12, 12') is encoded according to a second encoding method;
and/or
wherein the image data comprise pixel values of a plurality of mutually different colors, wherein the at least one predetermined other pixel is not arranged directly adjacent to the respective pixel, and wherein the pixel values of the respective pixel and of the at least one predetermined other pixel have the same color;
and/or
wherein the image data comprise pixel values of a plurality of mutually different colors, wherein the determination of the estimated pixel value of the respective pixel takes place in dependence on the respective pixel value of a plurality of predetermined other pixels, wherein some of these pixels are arranged directly adjacent to the respective pixel and the pixel values thereof have a different color than the pixel value of the respective pixel, and wherein some others of the predetermined other pixels are not arranged directly adjacent to the respective pixel and the pixel values of these other pixels have the same color as the pixel value of the respective pixel.

9. A method according to any one of the preceding claims,
wherein the pixels are provided in an arrangement of a plurality of rows, wherein the pixel values are compressed row-wise, and wherein the determination of the estimated pixel value of the respective pixel takes place in dependence on the respective pixel value of a plurality of predetermined other pixels, with the predetermined other pixels being arranged in the row of the respective pixel and/or in an already compressed row, or with the predetermined other pixels only being arranged in the row of the respective pixel;
and/or
wherein the image data represent a frame from a time sequence of a plurality of frames;
and/or
wherein the method is configured to compress the image data in a lossless manner;
and/or
wherein the difference value is quantized according to a difference value quantization rule, with the first binary word representing the quantized difference value;
and/or
wherein the difference values (24, 24') of a plurality of respective pixels that are each represented by a first binary word (12, 12') are encoded in parallel.

10. A method of compressing and decompressing image data, wherein the image data are compressed in accordance with a method according to any one of the preceding claims and comprise a bitstream (50, 50') having a plurality of bits, wherein the bitstream (50, 50') represents a plurality of compressed pixel values which are associated with a respective pixel, wherein the method for decompressing comprises the following steps:
- segmenting the bitstream (50, 50') into a plurality of second binary words (14, 14'), with each of the second binary words (14, 14') having a second length (L2) that is a predetermined length of the respective second binary word (14, 14'), and with each of the second binary words (14, 14') having at least one encoding information bit (18) at a predetermined position in the second binary word (14, 14');
- decoding at least one first binary word (12, 12') by at least one of the second binary words (14, 14'), with the first binary word (12, 12') representing a difference value (24, 24') that corresponds to a predetermined relation between a pixel value of a respective pixel and an estimated pixel value of the respective pixel,
wherein it is determined whether the encoding information bit (18) of the at least one of the second binary words (14, 14') is set to a first value, wherein the first binary word (12, 12') is completely decoded by a single one of the second binary words (14) when the encoding information bit (18) of the single one of the second binary words (14) is set to the first value, and wherein the first binary word (12, 12') is otherwise completely decoded by a plurality of the second binary words (14');
- determining a mapped estimated pixel value of the respective pixel in dependence on at least one previously decompressed pixel value that corresponds to the at least one predetermined other pixel using an estimation rule; and
- determining a decompressed pixel value of the respective pixel in dependence on the first decoded binary word (12, 12') and on the mapped estimated pixel value of the respective pixel.

11. A method according to claim 10,
wherein the first binary word (12, 12') is decoded by at least one of the second binary words (14, 14') in that the encoding information bit (18) is removed from the at least one of the second binary words (14, 14') to form the first binary word (12, 12') or a partial word (20) of the first binary word (12, 12');
and/or
wherein a plurality of first binary words (12, 12') are decoded in parallel; and/or
wherein the first binary word (12, 12') is decoded by the plurality of second binary words (14, 14') in that the following steps are carried out:
- identifying a set of second binary words (14') that corresponds to the plurality of second binary words (14') for decoding the first binary word (12, 12'), wherein the second binary words (14') of the set are identified in that, starting with a respective second binary word (14') of the bitstream (50') whose encoding information bit (18) is not set to the first value and that forms a first element of the set, the respective encoding information bits (18) of the second binary words (14') following according to an ascending order of the bitstream (50') are evaluated to determine whether the respective encoding information bits (18) are set to the first value, with the subsequent second binary words (14') forming further elements of the set when the respective encoding information bits (18) are not set to the first value, with that one of the subsequent second binary words (14') whose encoding information bit (18) is set to the first value forming the last element of the set;
- forming a plurality of partial words (20) in that at least the encoding information bit (18) is removed from each of the second binary words (14') of the set; and
- forming the first binary word (12, 12') in that the plurality of partial words (20) are concatenated with one another.

12. A data carrier having software stored on the data carrier, comprising commands which, when the software is executed by a computer, cause the computer to carry out the method according to any one of the claims 1 to 9 and/or according to one of the claims 10 to 11.

13. An apparatus having a data carrier according to claim 12 and having a computing device, wherein the computing device is adapted to execute the software stored on the data carrier;
wherein the computing device preferably has at least one graphics processor and/or is connected to at least one graphics processor;
and/or
wherein the apparatus is preferably configured for recording a time sequence of frames, in particular wherein the apparatus is a moving image camera, with the computing device being configured to compress at least one of the frames in accordance with the method according to any one of the claims 1 to 9 and/or to decompress a bitstream that represents at least one of the frames in accordance with the method according to one of the claims 10 to 11.

14. Software on a data carrier comprising commands which, when the software is executed by a computer, cause the computer to carry out the method according to any one of the claims 1 to 9 and/or according to one of the claims 10 to 11.

## Revendications

1. Procédé de compression de données d'image comprenant une multitude de valeurs de pixel associées à un pixel concerné, dans lequel, pour au moins certains pixels, les valeurs de pixel sont compressées conformément aux étapes suivantes consistant à :
- déterminer une valeur de pixel estimée du pixel concerné en fonction de la valeur de pixel d'au moins un autre pixel prédéfini, en utilisant au moins une règle d'estimation ;
- former une valeur différentielle (24, 24') du pixel concerné, qui correspond à une relation prédéfinie entre la valeur de pixel et la valeur de pixel estimée du pixel concerné, la valeur différentielle (24, 24') étant représentée par un premier mot binaire (12, 12') ayant une première longueur (L1), la première longueur (L1) étant une longueur effective du premier mot binaire (12, 12') ;
**caractérisé par** l'étape consistant à :
- coder le premier mot binaire (12, 12') par au moins un deuxième mot binaire (14, 14'), ledit au moins un deuxième mot binaire (14, 14') ayant une deuxième longueur (L2) qui est une longueur prédéfinie du deuxième mot binaire respectif (14, 14'),
dans lequel
la première longueur (L1) est comparée à la deuxième longueur (L2) pour déterminer si la première longueur (L1) est inférieure à la deuxième longueur (L2),
le premier mot binaire (12, 12') est entièrement codé par un deuxième mot binaire unique (14) si la première longueur (L1) est inférieure à la deuxième longueur (L2), et
sinon, le premier mot binaire (12, 12') est entièrement codé par une pluralité de deuxièmes mots binaires (14'),
la deuxième longueur (L2) est la même pour un groupe de pixels respectif, le groupe de pixels respectif représentant une zone d'image locale dans les données d'image, et la deuxième longueur (L2) étant choisie de manière à être proportionnelle à la première longueur moyenne (L1) des premiers mots binaires du groupe de pixels concerné.

2. Procédé selon la revendication 1,
dans lequel ledit au moins un deuxième mot binaire (14, 14') comprend au moins un bit d'information de codage (18), ledit bit d'information de codage (18) est fixé à une première valeur si ledit premier mot binaire (12, 12') est codé par un deuxième mot binaire unique (14), et, sinon, ledit bit d'information de codage (18) de l'un au moins de la pluralité de deuxièmes mots binaires (14') est fixé à une deuxième valeur.

3. Procédé selon la revendication 2,
dans lequel le premier mot binaire (12, 12') est codé par ledit au moins un deuxième mot binaire (14, 14') en ajoutant le bit d'information de codage (18) au premier mot binaire (12, 12') ou à un mot partiel (20) du premier mot binaire (12, 12') pour former ledit au moins un deuxième mot binaire (14, 14'),
le bit d'information de codage (18) présente une position prédéfinie dans le deuxième mot binaire (14, 14'),
de préférence, si la somme de la première longueur (L1) et du nombre dudit au moins un bit d'information de codage (18) est inférieure à la deuxième longueur (L2), le premier mot binaire (12, 12') est concaténé avec un nombre de bits de poids zéro (30), de sorte que ledit au moins un deuxième mot binaire (14, 14') présente la deuxième longueur (L2) ;
et/ou
le premier mot binaire (12, 12') est codé par le deuxième mot binaire unique (14) en concaténant le premier mot binaire (12, 12') et le bit d'information de codage (18) pour former le deuxième mot binaire unique (14).

4. Procédé selon la revendication 2 ou la revendication 3,
dans lequel le premier mot binaire (12, 12') est codé par la pluralité de deuxièmes mots binaires (14') en décomposant le premier mot binaire (12, 12') en une pluralité de mots partiels (20), chacun de la pluralité de mots partiels (20) présentant une troisième longueur (L3) qui est une longueur prédéfinie d'un mot partiel respectif (20) et qui est inférieure à la deuxième longueur (L2), et en associant à chacun de la pluralité de mots partiels (20) l'un de la pluralité de deuxièmes mots binaires (14'), et en concaténant chacun de la pluralité de mots partiels (20) avec le bit d'information de codage (18) du deuxième mot binaire associé (14') pour former le deuxième mot binaire associé (14').

5. Procédé selon la revendication 4,
dans lequel la décomposition du premier mot binaire (12, 12') en la pluralité de mots partiels s'effectue dans un ordre croissant des bits du premier mot binaire (12, 12'), un mot partiel respectif (20) étant formé par un nombre de bits du premier mot binaire (12, 12') égal à la troisième longueur (L3), et, si la troisième longueur (L3) n'est pas un multiple entier de la première longueur (L1), le dernier de la pluralité de mots partiels (20) selon l'ordre croissant est formé par une concaténation d'un nombre de bits de poids zéro avec un nombre résiduel de bits du premier mot binaire (12, 12'), de sorte que la somme du nombre de bits de poids zéro et du nombre résiduel de bits du premier mot binaire (12, 12') est égale à la troisième longueur (L3) ; et/ou
la deuxième longueur (L2) et la troisième longueur (L3) diffèrent exactement du nombre dudit au moins un bit d'information (18).

6. Procédé selon la revendication 5,
dans lequel le bit d'information de codage (18) concaténé avec le dernier de la pluralité de mots partiels (20) selon l'ordre croissant est fixé à la première valeur, et le bit d'information respectif (18) des autres mots partiels (20) est fixé à la deuxième valeur.

7. Procédé selon l'une des revendications précédentes,
dans lequel plusieurs groupes de pixels sont formés en fonction de la similitude des valeurs différentielles (24, 24') des pixels, de sorte que les valeurs différentielles (24, 24') des pixels d'un groupe de pixels concerné sont plus similaires entre elles que par rapport aux valeurs différentielles (24, 24') des pixels d'un autre groupe de pixels.

8. Procédé selon l'une des revendications précédentes,
dans lequel, si le premier mot binaire (12, 12') est entièrement codé par une pluralité de deuxièmes mots binaires (14'), la deuxième longueur (L2) est constante pour la pluralité de deuxièmes mots binaires (14, 14') ou différente entre la pluralité de deuxièmes mots binaires (14, 14') ;
et/ou
l'étape de codage du premier mot binaire (12, 12') par au moins un deuxième mot binaire (14, 14') correspond à un premier procédé de codage, et pour au moins quelques autres pixels qui ne sont pas codés selon le premier procédé de codage, le premier mot binaire (12, 12') est codé selon un deuxième procédé de codage ;
et/ou
les données d'image comprennent des valeurs de pixel de plusieurs couleurs différentes les unes des autres, ledit au moins un autre pixel prédéfini n'est pas situé immédiatement à côté du pixel concerné, et les valeurs de pixel du pixel concerné et dudit au moins un autre pixel prédéfini présentent la même couleur ;
et/ou
les données d'image comprennent des valeurs de pixel de plusieurs couleurs différentes les unes des autres, la détermination de la valeur de pixel estimée du pixel concerné s'effectue en fonction de la valeur de pixel respective de plusieurs autres pixels prédéfinis, une partie de ces pixels est disposée immédiatement à côté du pixel concerné, et les valeurs de pixel de cette partie présentent une autre couleur que la valeur de pixel du pixel concerné, et une autre partie des autres pixels prédéfinis n'est pas disposée immédiatement à côté du pixel concerné et les valeurs de pixel de cette autre partie présentent la même couleur que la valeur de pixel du pixel concerné.

9. Procédé selon l'une des revendications précédentes,
dans lequel les pixels sont prévus dans un agencement de plusieurs lignes, les valeurs de pixel sont compressées ligne par ligne, et la détermination de la valeur de pixel estimée du pixel concerné s'effectue en fonction de la valeur de pixel respective de plusieurs autres pixels prédéfinis, les autres pixels prédéfinis sont disposés dans la ligne du pixel concerné et/ou dans une ligne déjà compressée, ou les autres pixels prédéfinis sont disposés exclusivement dans la ligne du pixel concerné ;
et/ou
les données d'image représentent une image individuelle parmi une séquence temporelle de plusieurs images individuelles ;
et/ou
le procédé est conçu pour compresser les données d'image sans perte ; et/ou
la valeur différentielle est quantifiée selon une règle de quantification de valeur différentielle, le premier mot binaire représentant la valeur différentielle quantifiée ;
et/ou
les valeurs différentielles (24, 24') de plusieurs pixels concernés, représentées chacune par un premier mot binaire (12, 12'), sont codées en parallèle.

10. Procédé de compression et de décompression de données d'image, les données d'image étant compressées par un procédé selon l'une des revendications précédentes et comprenant un flux binaire (50, 50') ayant une multitude de bits, le flux binaire (50, 50') représentant une multitude de valeurs de pixels compressées associées à un pixel concerné,
le procédé de décompression comprenant les étapes consistant à :
- décomposer le flux binaire (50, 50') en une multitude de deuxièmes mots binaires (14, 14'), chacun des deuxièmes mots binaires (14, 14') ayant une deuxième longueur (L2) qui est une longueur prédéfinie du deuxième mot binaire respectif (14, 14'), chacun des deuxièmes mots binaires (14, 14') ayant au moins un bit d'information de codage (18) à une position prédéfinie dans le deuxième mot binaire (14, 14') ;
- décoder au moins un premier mot binaire (12, 12') par au moins un des deuxièmes mots binaires (14, 14'), le premier mot binaire (12, 12') représentant une valeur différentielle (24, 24') correspondant à une relation prédéfinie entre une valeur de pixel d'un pixel concerné et une valeur de pixel estimée du pixel concerné,
en déterminant si le bit d'information de codage (18) dudit au moins un des deuxièmes mots binaires (14, 14') est fixé à une première valeur, le premier mot binaire (12, 12') étant entièrement décodé par un seul des deuxièmes mots binaires (14) si le bit d'information de codage (18) du seul des deuxièmes mots binaires (14) est fixé à la première valeur, et sinon, le premier mot binaire (12, 12') est entièrement décodé par plusieurs des deuxièmes mots binaires (14') ;
- déterminer une valeur de pixel estimée recréée du pixel concerné en fonction d'au moins une valeur de pixel précédemment décompressée qui correspond audit au moins un autre pixel prédéfini, en utilisant une règle d'estimation ; et
- déterminer une valeur de pixel décompressée du pixel concerné en fonction du premier mot binaire décodé (12, 12') et de la valeur de pixel estimée recréée du pixel concerné.

11. Procédé selon la revendication 10,
dans lequel le premier mot binaire (12, 12') est décodé par ledit au moins un des deuxièmes mots binaires (14, 14') en retirant le bit d'information de codage (18) dudit au moins un des deuxièmes mots binaires (14, 14') pour former le premier mot binaire (12, 12') ou un mot partiel (20) du premier mot binaire (12, 12') ;
et/ou
plusieurs premiers mots binaires (12, 12') sont décodés en parallèle ;
et/ou
le premier mot binaire (12, 12') est décodé par la pluralité de deuxièmes mots binaires (14, 14') en exécutant les étapes suivantes consistant à :
- identifier un ensemble de deuxièmes mots binaires (14') correspondant à la pluralité de deuxièmes mots binaires (14') de décodage du premier mot binaire (12, 12'), les deuxièmes mots binaires (14') de l'ensemble étant identifiés par évaluation des bits d'information de codage respectifs (18) des deuxièmes mots binaires (14') suivants selon un ordre croissant du flux binaire (50'), en commençant par un deuxième mot binaire respectif (14') du flux binaire (50') dont le bit d'information de codage (18) n'est pas fixé à la première valeur et qui constitue un premier élément dudit ensemble, afin de déterminer si les bits d'information de codage respectifs (18) sont fixés à la première valeur, sachant que les deuxièmes mots binaires suivants (14') forment d'autres éléments dudit ensemble si les bits d'information de codage respectifs (18) ne sont pas fixés à la première valeur, et celui des deuxièmes mots binaires suivants (14') dont le bit d'information de codage (18) est fixé à la première valeur forme le dernier élément dudit ensemble ;
- former plusieurs mots partiels (20) en retirant au moins le bit d'information de codage (18) de chacun des deuxièmes mots binaires (14') dudit ensemble ;
- former le premier mot binaire (12, 12') en concaténant lesdits plusieurs mots partiels (20) entre eux.

12. Support de données avec un logiciel stocké sur le support de données, comprenant des instructions qui, lors de l'exécution du logiciel par un ordinateur, l'incitent à mettre en oeuvre le procédé selon l'une des revendications 1 à 9 et/ou selon l'une des revendications 10 à 11.

13. Dispositif comprenant un support de données selon la revendication 12 et un dispositif de calcul, le dispositif de calcul étant adapté pour exécuter le logiciel stocké sur le support de données ;
le dispositif de calcul comprenant de préférence au moins un processeur graphique et/ou étant connecté à au moins un processeur graphique ;
et/ou
le dispositif étant de préférence adapté pour enregistrer une séquence temporelle d'images individuelles, en particulier le dispositif étant une caméra à images animées, le dispositif de calcul étant adapté pour compresser au moins l'une des images individuelles par le procédé selon l'une des revendications 1 à 9 et/ou pour décompresser un flux binaire, représentant au moins l'une des images individuelles, par le procédé selon l'une des revendications 10 à 11.

14. Logiciel sur un support de données, comprenant des instructions qui, lors de l'exécution du logiciel par un ordinateur, l'incitent à mettre en oeuvre le procédé selon l'une des revendications 1 à 9 et/ou selon l'une des revendications 10 à 11.
